# EUROPÄISCHE PATENTSCHRIFT

(11) **EP 0 212 720 B1**
(45) Veröffentlichungstag und Bekanntmachung des Hinweises auf die Patenterteilung: **03.02.1993**
(21) Anmeldenummer: 86201307.5
(22) Anmeldetag: 23.07.1986
(51) Int. Cl.: G11B 15/665, G11B 15/675

(54) **Aufzeichnungs- und/oder Wiedergabegerät**
Recording and/or reproducing apparatus
Appareil d'enregistrement et/ou de reproduction

(30) Priorität: 06.08.1985 AT 2304/85
(43) Veröffentlichungstag der Anmeldung: 04.03.1987
(73) Patentinhaber: Philips Electronics N.V., 5621 BA Eindhoven (NL)
(72) Erfinder: Hütter, Heinrich INTERNATIONAL OCTROOIBUREAU B.V., NL-5656 AA Eindhoven (NL)
(74) Vertreter: Smit, Frederik Jan

(56) Entgegenhaltungen:
- EP-A- 0 057 921
- EP-A- 0 087 952
- EP-A- 0 105 501
- EP-A- 0 192 448
- GB-A- 2 094 542
- US-A- 4 442 462

## Beschreibung

Die Erfindung bezieht sich auf ein Aufzeichnungs- und/oder Wiedergabegerät für ein in einer Kassette untergebrachtes, aus derselben herausführbares Magnetband mit einer zum Halten und verstellen einer Kassette vorgesehenen Kassettenhalteeinrichtung, die zwischen einer Ladeposition, in der die Kassette in dieselbe einsetzbar ist, und einer Betriebsposition, in der die Kassette eine Betriebslage einnimmt, verstellbar ist, mit einer zum Herausführen des Magnetbandes aus der in ihrer Betriebslage befindlichen Kassette und zum Herumschlingen desselben um eine Abtasteinrichtung für dasselbe vorgesehenen Bandfädeleinrichtung, die zwischen einer Ausfädelposition, in der sie das in der Kassette untergebrachte Magnetband hintergreift, und einer Einfädelposition, in der sie das bei ihrer Verstellung von ihrer Ausfädelposition in ihre Einfädelposition aus der Kassette herausgeführte Magnetband um die Abtasteinrichtung herumgeschlungen hält, verstellbar ist, mit mindestens einer zum Durchführen mindestens einer Bandlaufbetriebsart bei in ihrer Betriebslage befindlicher Kassette vorgesehenen Bandlaufbetriebseinrichtung, die zwischen mindestens zwei Betriebspositionen verstellbar ist, und in mindestens einer ihrer beiden Betriebspositionen zum Durchführen der Bandlaufbetriebsart wirksam ist, und mit einem von einem Motor in entgegengesetzten Drehrichtungen antreibbaren Differentialgetriebe, das zwei Ausgänge aufweist und mit dem die Kassettenhalteeinrichtung, die Bandfädeleinrichtung und die Bandlaufbetriebseinrichtung verstellbar sind, wobei über einen Ausgang eine von diesen drei Einrichtungen verstellbar ist und über den anderen Ausgang die beiden anderen von diesen drei Einrichtungen verstellbar sind.

Ein solches Gerät ist aus der EP-OS 0 192 448 bekannt. Bei diesem bekannten Gerät sind über einen Ausgang des Differentialgetriebes die Kassettenhalteeinrichtung und über den anderen Ausgang des Differentialgetriebes die Bandfädeleinrichtung und mehrere Bandlaufbetriebseinrichtungen, wie eine Andruckrolleneinrichtung, eine Spulentellerantriebseinrichtung und eine Spulentellerbremseinrichtung, verstellbar. Dabei treibt dieser andere Ausgang zugleich zwei rotierend antreibbare Steuerkulissenscheiben an, von denen die eine die Verstellung der Bandfädeleinrichtung und die andere die Verstellung der Bandlaufbetriebseinrichtungen steuert. Das Vorsehen von zwei solchen Steuerkulissenscheiben ist relativ aufwendig und erfordert einen relativ großen Raumbedarf. Um genau aufeinander abgestimmte, einwandfreie Bewegungsabläufe zu gewährleisten, müssen die beiden zugleich angetriebenen Steuerkulissenscheiben in ihren Winkellagen zueinander genau positioniert sein, was im Hinblick auf eine möglichst einfache Montage ungünstig ist.

Die Erfindung hat sich zur Aufgabe gestellt, die vorstehend angeführten Schwierigkeiten zu vermeiden und mit einem möglichst einfachen, raumsparenden Verstellmechanismus zwischen dem Ausgang des Differentialgetriebes, über den zwei von den drei Einrichtungen verstellbar sind, und den betreffenden zwei Einrichtungen das Auslangen zu finden. Hiefür ist die Erfindung dadurch gekennzeichnet, daß mit dem Differentialgetriebe über den anderen Ausgang ein Schieber zwischen einer Ruheposition und mindestens einer Verstellposition verstellbar ist, der bei seiner Verstellung die beiden anderen von den drei Einrichtungen zeitlich nacheinander verstellt. Auf diese Weise ist erreicht, daß das Differentialgetriebe über seinen anderen Ausgang nur einen einzigen Schieber, der seinerseits von der Kassettenhalteeinrichtung, der Bandfädeleinrichtung und der mindestens einen Bandlaufbetriebseinrichtung zwei dieser drei Einrichtungen zeitlich nacheinander verstellt, zu verstellen hat, so daß sich ein einfacher und raumsparender Aufbau ergibt.

Beispielsweise kann das Differentialgetriebe über den anderen Ausgang und den von diesem verstellbaren Schieber zeitlich nacheinander die Kassettenhalteeinrichtung und die Bandfädeleinrichtung und über den einen Ausgang die mindestens eine Bandlaufbetriebseinrichtung verstellen. Als besonders vorteilhaft hat sich erwiesen, wenn mit dem Differentialgetriebe über den einen Ausgang die Bandfädeleinrichtung und über den anderen Ausgang der Schieber antreibbar ist, der bei in ihrer Ausfädelposition befindlicher Bandfädeleinrichtung über den anderen Ausgang zwischen seiner Ruheposition und einer Zwischenposition, in der derselbe anhaltbar ist und die Bandfädeleinrichtung über den einen Ausgang zwischen ihrer Ausfädelposition und ihrer Einfädelposition verstellbar ist, und der bei in ihrer Einfädelposition befindlicher Bandfädeleinrichtung über den anderen Ausgang zwischen seiner Zwischenposition und seiner mindestens einen Verstellposition verstellbar ist, wobei mit dem Schieber bei seiner Verstellung zwischen seiner Ruheposition und seiner Zwischenposition die Kassettenhalteeinrichtung zwischen ihrer Ladeposition und ihrer Betriebsposition und bei seiner Verstellung zwischen seiner Zwischenposition und seiner mindestens einen Verstellposition die Bandlaufbetriebseinrichtung zwischen ihren mindestens zwei Betriebspositionen verstellbar ist. Hiedurch sind die Verstellungen der beiden über den anderen Ausgang des Differentialgetriebes und den Schieber verstellbaren Einrichtungen durch die Verstellung der über den einen Ausgang des Differentialgetriebes verstellbaren Einrichtung zeitlich voneinander getrennt, so daß der zeitliche Ablauf der Verstellungen der drei Einrichtungen im wesentlichen durch das Differentialgetriebe selbst bestimmt wird.

An dieser Stelle sei erwähnt, daß aus der EP-OS 0 057 921 ein Gerät bekannt ist, bei dem mit dem Differentialgetriebe über seinen anderen Ausgang ein Schieber antreibbar ist, wie dies erfindungsgemäß der Fall sein soll. Auch bei diesem bekannten Gerät ist mit dem Differentialgetriebe über seinen einen Ausgang die Bandfädeleinrichtung und über seinen anderen Ausgang der vorerwähnte Schieber antreibbar, der bei in ihrer Ausfädelposition befindlicher Bandfädeleinrichtung über den anderen Ausgang zwischen einer Ruheposition und einer Zwischenposition, in der der Schieber anhaltbar ist und die Bandfädeleinrichtung über den einen Ausgang des Differentialgetriebes zwischen ihrer Ausfädelposition und ihrer Einfädelposition verstellbar ist, und bei in ihrer Einfädelposition befindlicher Bandfädeleinrichtung über den anderen Ausgang zwischen seiner Zwischenposition und drei Verstellpositionen verstellbar ist. Mit dem Schieber ist bei seiner Verstellung zwischen seiner Ruheposition und seiner Zwischenposition eine verstellbare Geräteeinrichtung verstellbar. Diese Geräteeinrichtung weist einen zwischen einer Freigabeposition und einer Verriegelungsposition verstellbaren mehrarmigen Verriegelungshebel und eine denselben in Richtung zu seiner Verriegelungsposition belastende Feder auf. In seiner Verriegelungsposition verriegelt der Verriegelungshebel mit einem Hebelarm die zuvor in ihre Betriebsposition gebrachte Kassettenhalteeinrichtung und mit einem anderen Hebelarm betätigt derselbe einen Schalter. Bei der Verstellung des Schiebers zwischen seiner Zwischenposition und seinen drei Verstellpositionen sind mit demselben mehrere Bandlaufbetriebseinrichtungen, wie eine Andruckrolleneinrichtung, eine Spulentellerantriebseinrichtung, eine Spulentellerbremseinrichtung und eine Bandspannungsregeleinrichtung, verstellbar. Die Verstellung der Kassettenhalteeinrichtung erfolgt bei diesem bekannten Gerät von Hand aus, wobei zum Verstellen der Kassettenhalteeinrichtung von ihrer Ladeposition in ihre Betriebsposition dieselbe händisch niedergedrückt wird und zum umgekehrten Verstellen derselben von ihrer Betriebsposition in ihre Ladeposition eine auf die Kassettenhalteeinrichtung einwirkende Verstelleinrichtung händisch betätigt wird. Demgegenüber wird bei einem wie vorstehend gekennzeichneten erfindungsgemäßen Gerät zusätzlich zu der Bandfädeleinrichtung und der mindestens einen Bandlaufbetriebseinrichtung auch die Kassettenhalteeinrichtung über das Differentialgetriebe verstellt, womit gegenüber diesem bekannten Gerät eine erhebliche Vereinfachung und Einsparung erreicht wird.

Die Erfindung wird im folgenden anhand von drei Ausführungsbeispielen, auf die die Erfindung jedoch nicht beschränkt sein soll, näher beschrieben.

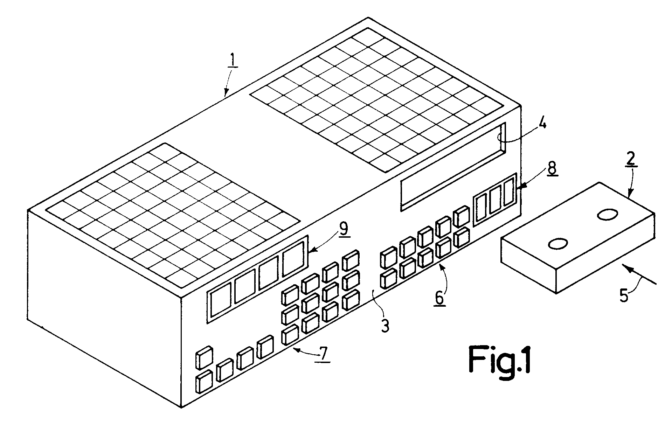

Die Fig. 1 zeigt gemäss einem ersten Ausführungsbeispiel der Erfindung in einem verkleinerten Massstab schematisch in einer Schrägansicht ein Aufzeichnungs- und Wiedergabegerät für Fernsehsignale und Tonsignale, in das durch eine Öffnung in der Frontwand desselben hindurch eine Kassette einsetzbar ist, die ein zwischen zwei nebeneinander liegenden Wickelkernen verlaufendes Magnetband enthält, auf dem Fernsehsignale in schräg zu seiner Längsrichtung verlaufenden Spuren mit rotierend antreibbaren Magnetköpfen speicherbar und von demselben abtastbar sind, und das ein Differentialgetriebe mit zwei Ausgängen aufweist, mit dem über einen Ausgang eine Kassettenhalteeinrichtung und eine eine Bandlaufbetriebseinrichtung bildende Wickeltellerantriebseinrichtung und über den anderen Ausgang eine Bandfädeleinrichtung verstellbar ist.

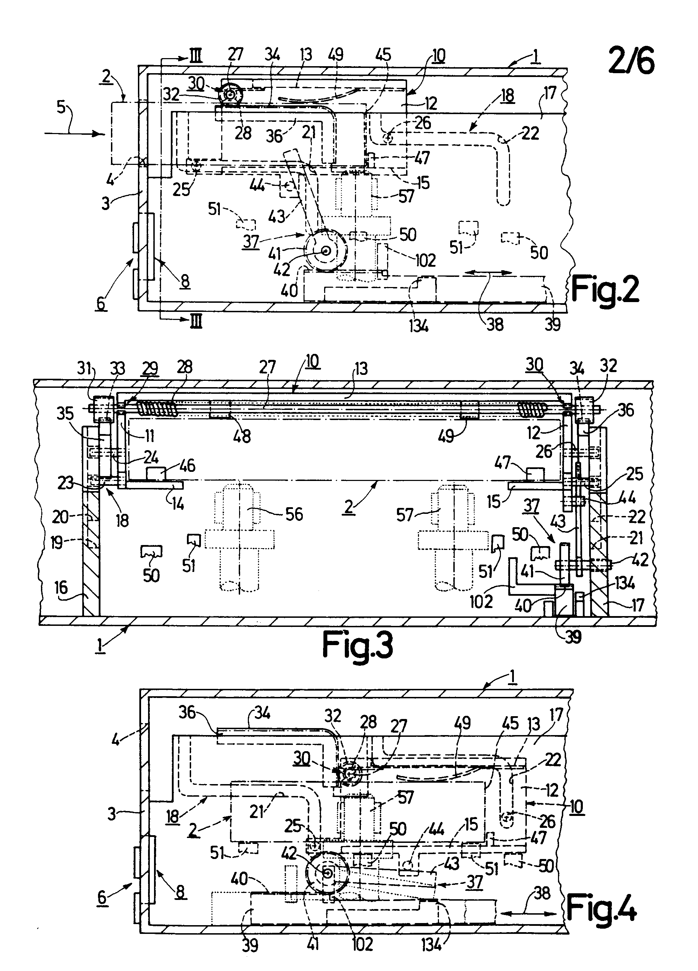

Die Fig. 2 zeigt in einem gegenüber der Fig. 1 grösseren Massstab bei weggeschnittener Gerätegehäuseseitenwand eine Seitenansicht eines Teiles des Gerätes gemäss Fig. 1 mit der zwischen einer Ladeposition und einer Betriebsposition verstellbaren Kassettenhalteeinrichtung für eine Kassette, wobei sich die Kassettenhalteeinrichtung in ihrer Ladeposition befindet.

Die Fig. 3 zeigt im gleichen Massstab wie in Fig. 2 gemäss einem Schnitt längs der Linie III-III in Fig. 2 eine Vorderansicht des die Kassettenhalteeinrichtung enthaltenden Teiles des Gerätes, wobei sich die Kassettenhalteeinrichtung ebenfalls in ihrer Ladeposition befindet.

Die Fig. 4 zeigt analog wie die Fig. 2 den die Kassettenhalteeinrichtung enthaltenden Teil des Gerätes, wobei sich die Kassettenhalteeinrichtung in ihrer Betriebsposition befindet.

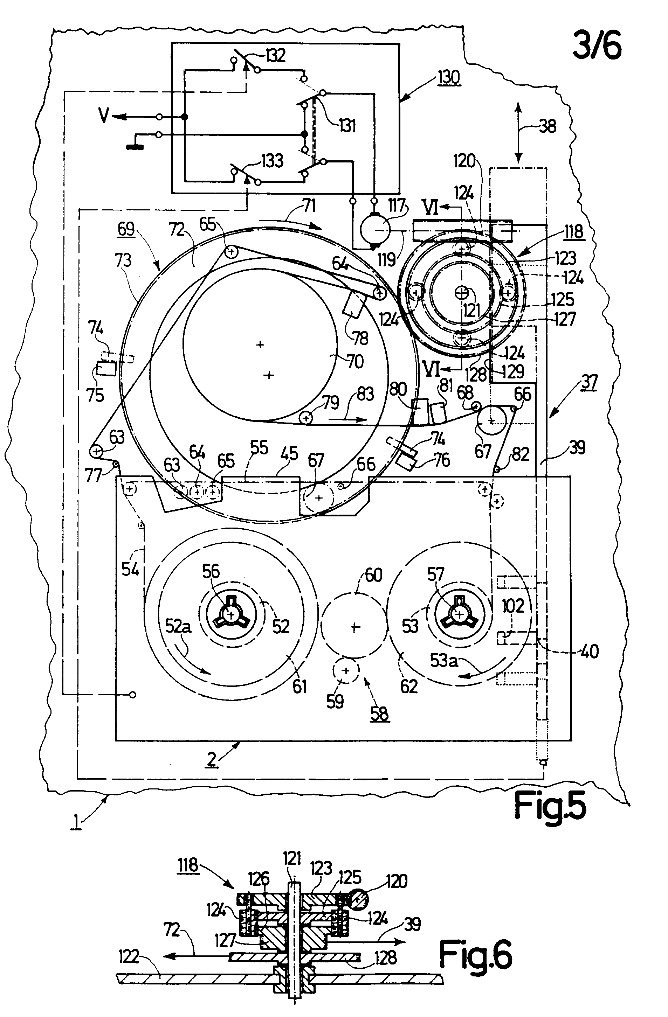

Die Fig. 5 zeigt im gleichen Massstab wie die Figuren 2 bis 4 in schematische Weise eine Draufsicht auf einen Teil des Gerätes gemäss Fig. 1, der die zwischen einer Ausfädelposition und einer Einfädelposition verstellbare Bandfädeleinrichtung und das Differentialgetriebe enthält.

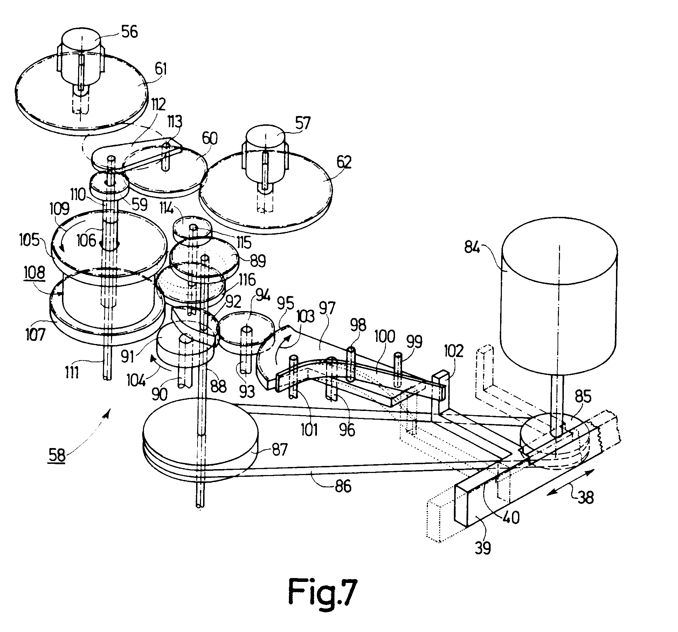

Die Fig. 6 zeigt im gleichen Massstab wie in Fig. 5 gemäss einem Schnitt längs der Linie VI-VI in Fig. 5 das Differentialgetriebe des Gerätes gemäss Fig. 1.

Die Fig. 7 zeigt etwa im gleichen Massstab wie in den Figuren 2 bis 5 schematisch in einer Schrägansicht die zwischen zwei Betriebspositionen verstellbare Wickeltellerantriebseinrichtung des Gerätes gemäss Fig. 1 zum Antreiben von zwei Wickeltellern, mit denen über zwei Wickeldorne die beiden in der Kassette nebeneinander liegenden Wickelkerne antreibbar sind, wobei die einzelnen Teile der Wickeltellerantriebseinrichtung in axialer Richtung auseinandergezogen dargestellt sind, um die Deutlichkeit der Zeichnung zu erhöhen.

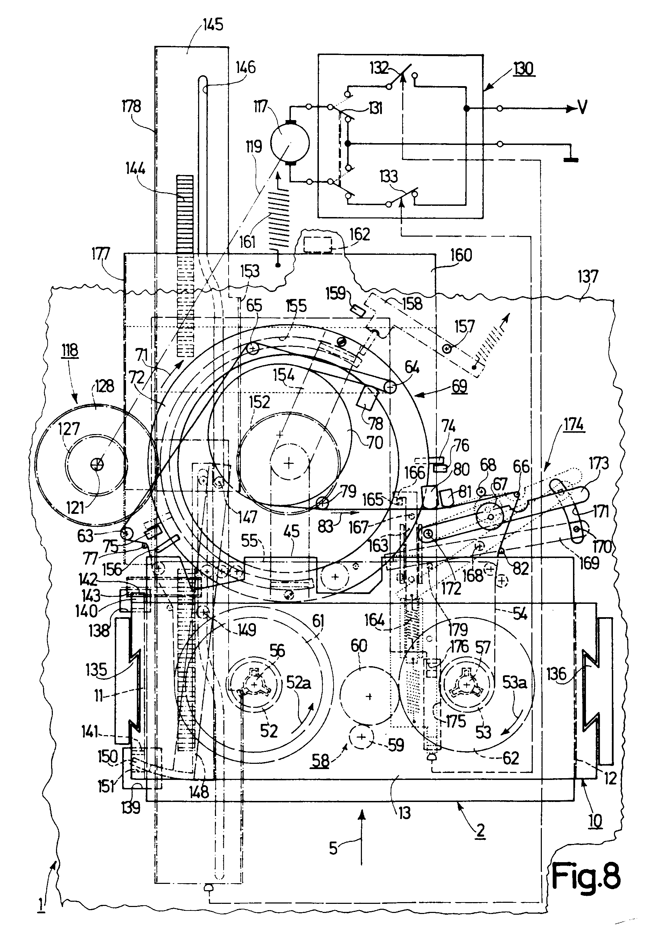

Die Fig. 8 zeigt gemäss einem zweiten Ausführungsbeispiel der Erfindung in derselben Darstellungsweise wie in Fig. 5 ein Aufzeichnungs- und Wiedergabegerät für Fernsehsignale und Tonsignale, in das durch eine Öffnung in der Deckenwand desselben hindurch eine Kassette einsetzbar ist und das ein Differentialgetriebe mit zwei Ausgängen aufweist, mit dem über einen Ausgang eine Kassettenhalteeinrichtung und eine Bandfädeleinrichtung und über den anderen Ausgang eine eine Bandlaufbetriebseinrichtung bildende Andruckrolleneinrichtung verstellbar ist.

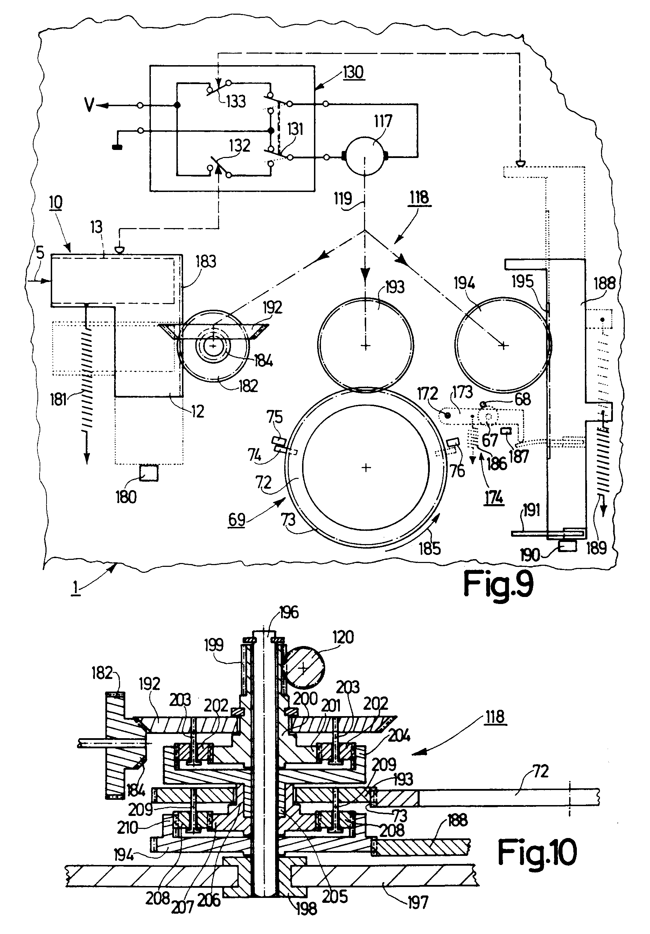

Die Fig. 9 zeigt gemäss einem dritten Ausführungsbeispiel der Erfindung in stark schematisierter Weise ein Aufzeichnungs- und Wiedergabegerät für Fernsehsignale und Tonsignale, das ein Differentialgetriebe mit drei Ausgängen aufweist, das über einen Ausgang eine Kassettenhalteeinrichtung, über einen Ausgang eine Bandfädeleinrichtung und über einen Ausgang eine eine Bandlaufbetriebseinrichtung bildende Andruckrolleneinrichtung verstellt.

Die Fig. 10 zeigt in einem gegenüber der Fig. 9 grösseren Massstab in einem Querschnitt das Differentialgetriebe des Gerätes gemäss Fig. 9.

Die Fig. 1 zeigt ein Aufzeichnungs- und Wiedergabegerät 1, das zum Aufzeichnen und Wiedergeben von Fernsehsignalen und Tonsignalen auf einem Magnetband ausgebildet ist. Das Magnetband ist in einer in Fig. 1 schematisch dargestellten quaderförmigen Kassette 2 untergebracht, die zwei nebeneinander liegende Wickelkerne enthält, zwischen denen das Magnetband verläuft, und die durch eine in der Frontwand 3 des Gehäuses des Gerätes vorgesehene Öffnung 4 hindurch in Richtung des Pfeiles 5 in das Gerät 1 händisch einsetzbar ist. Beim Einsetzen der Kassette 2 in das Gerät wird dieselbe in eine verstellbare Kassettenhalteeinrichtung eingeschoben, deren Aufbau nachfolgend noch detailliert beschrieben ist. Mit der Kassettenhalteeinrichtung wird die Kassette nach dem vollständigen Einsetzen derselben in das Gerät zuerst parallel und danach senkrecht zu den Kassettenhauptwänden in eine in den Figuren 4 und 5 schematisch angedeutete Betriebslage im Gerät abgesenkt. Zum Einschalten von Betriebsarten des Gerätes, wie "Aufnahme", "Wiedergabe im Normalen Vorlauf", "Wiedergabe im Normalen Rücklauf", "Wiedergabe bei Bandstillstand", "Schneller Vorlauf", "Schneller Rücklauf" und dergleichen, und zum Einschalten von Betriebsfunktionen, wie "Verstellen der Kassettenhalteeinrichtung", "Verstellen der Bandfädeleinrichtung" und dergleichen, weist das Gerät 1 an der Frontwand 3 einen ersten Satz 6 von Bedienungstasten auf. Zum Vorprogrammieren des Gerätes und zum Eingeben von weiteren Daten, beispielsweise zum Einstellen einer Tageszeituhr, weist das Gerät 1 an der Frontwand 3 einen zweiten Satz 7 von Bedienungstasten auf. Ferner weist das Gerät 1 an der Frontwand 3 zwei Anzeigeeinheiten 8 und 9 auf, deren Anzeigestellen beispielsweise je aus sieben Segmenten aufgebaut sind und die beispielsweise zum Anzeigen von Zählwerksständen eines Zählwerkes zum Messen des Bandverbrauchs und zum Anzeigen von Uhrzeiten dienen.

Wie bereits erwähnt, weist das Gerät 1 zum Überführen einer in das Gerät händisch eingeschobenen Kassette 2 in ihre Betriebslage eine verstellbare Kassettenhalteeinrichtung auf, die in den Figuren 2 bis 4 mit dem Bezugszeichen 10 versehen ist. Ein solche Kassettenhalteeinrichtung ist an sich bereits in der älteren österreichischen Patentanmeldung A 1084/85 detailliert beschrieben, weshalb nachfolgend nur eine kurzgefasste Beschreibung erfolgt. Die Kassettenhalteeinrichtung 10 ist im wesentlichen schachtförmig ausgebildet und weist zwei Seitenwände 11 und 12, eine die beiden Seitenwände miteinander verbindende, durchgehende Deckenwand 13 und zwei von den Seitenwänden 11 und 12 abgewinkelte, zueinander hin gerichtete Bodenwandabschnitte 14 und 15 auf. Die Kassettenhalteeinrichtung 10 ist zwischen einer in der Figuren 2 und 3 dargestellten Ladeposition und einer in Fig. 4 dargestellten Betriebsposition parallel zu ihren Seitenwänden 11 und 12 entlang einer parallel und senkrecht zu ihrer Deckenwand 13 verlaufenden Bewegungsbahn verstellbar geführt. Die Bewegungsbahn weist dabei einen L-förmigen Verlauf auf, wobei die Kassettenhalteeinrichtung 10 von ihrer Ladeposition zuerst parallel zu ihrer Deckenwand 13 und danach senkrecht zu ihrer Deckenwand bis in ihre Betriebsposition verstellbar geführt ist. Zum Führen der Kassettenhalteeinrichtung 10 entlang dieser L-förmigen Bewegungsbahn ist zwischen der Kassettenhalteeinrichtung und zwei im Gerät feststehenden, parallel zu den Seitenwänden 11 und 12 verlaufenden Führungsplatten 16 und 17 eine Führungseinrichtung 18 vorgesehen. Die Führungseinrichtung 18 weist in jeder Führungsplatte 16 bzw. 17 zwei die L-förmige Bewegungsbahn festlegende L-förmige Führungsnuten 19 und 20 bzw. 21 und 22 auf. Ferner weist die Führungseinrichtung 18 an jeder Seitenwand 11 bzw. 12 zwei in dieselbe eingesetzte Führungsstifte 23 und 24 bzw. 25 und 26 auf, die mit ihren freien Enden in die Führungsnuten 19 und 20 bzw. 21 und 22 ragen. Um die Kassettenhalteeinrichtung 10 bei ihrer Montage im Gerät mit ihren Führungsstiften 23, 24, 25 und 26 einfach in die Führungsnuten 19, 20, 21 und 22 einsetzen zu können, weisen die Führungsnuten an ihren der Frontwand 3 zugewandten Enden je eine nach oben abgewinkelte Verlängerungsnut auf, die sich bis zum oberen Ende der Führungsplatten 16 und 17 erstrecken und in deren offene Enden bei der Montage der Kassettenhalteeinrichtung 10 die Führungsstifte einfach von oben her einführbar sind.

An der Kassettenhalteeinrichtung 10 greift eine dieselbe von der Ladeposition in die Betriebsposition verstellende Verstellfeder und andererseits eine dieselbe von der Betriebsposition in die Ladeposition verstellende, motorisch antreibbare Verstelleinrichtung an.

Die Verstellfeder ist durch eine mit Vorspannung um eine senkrecht zu den Seitenwänden 11 und 12 der Kassettenhalteeinrichtung 10 verlaufende Welle 27 gewundene zylindrische Schraubendrehfeder 28 gebildet, wobei der Windungssinn gemäss den Figuren 2 und 4 entgegen dem Uhrzeigersinn gewählt ist. Das gemäss Fig. 3 linke Ende der Schraubendrehfeder 28, das gegenüber den Windungen derselben quer zur Welle 27 abstehend ausgebildet ist, greift an der Deckenwand 13 der Kassettenhalteeinrichtung 10 an und stützt sich an derselben von unten her ab. Das gemäss Fig. 3 rechte Ende der Schraubendrehfeder 28 greift an der Welle 27 an und ist an der Welle 27 festgeschweisst. Die Welle 27 ist in je eine zur Frontwand 3 hin teilweise offene Lagerstelle 29 bzw. 30 in einer Seitenwand 11 bzw. 12 eingeschnappt und auf diese Weise an der Kassettenhalteeinrichtung 10 drehbar gelagert. Im Bereich jeder Seitenwand 11 bzw. 12 der Kassettenhalteeinrichtung 10 ist ein Zahnrad 31 bzw. 32 an der Welle 27 befestigt. Jedes Zahnrad 31 bzw. 32 steht mit einer denselben L-förmigen Verlauf wie die Bewegungsbahn der Kassettenhalteeinrichtung 10 aufweisenden Verzahnung 33 bzw. 34 in Eingriff, die je an einer an einer Führungsplatte 16 bzw. 17 befestigten L-förmigen Leiste 35 bzw. 36 vorgesehen ist. Die vorgespannte Schraubendrehfeder 28 trachtet danach, mit ihrer Vorspannung die Welle 27 und die daran befestigten Zahnräder 31 und 32 gemäss Fig. 2 im Uhrzeigersinn anzutreiben. Ein solches Antreiben hat zur Folge, dass sich die Zahnräder 31 und 32 an den Verzahnungen 33 und 34 abwälzen und hierbei die Kassettenhalteeinrichtung 10 von ihrer Ladeposition in ihre Betriebsposition verstellen. Das Abwälzen der Zahnräder 31 und 32 an den Verzahnungen 33 und 34 und die dadurch bewirkte Verstellung der Kassettenhalteeinrichtung 10 ist aber nur dann möglich, wenn die vorerwähnte Verstelleinrichtung, die ebenfalls an der Kassettenhalteeinrichtung 10 angreift und dieselbe entgegen der Kraft der Schraubendrehfeder 28 in ihrer Ladeposition festhält, in Bewegung versetzt wird, wie nachfolgend noch beschrieben ist.

Die Schraubendrehfeder 28 weist etwa dreihundert Windungen auf. Zur Erzielung einer ausreichenden Vorspannung der Schraubendrehfeder 28 wird die Welle 27 nach ihrer Anbringung an der Kassettenhalteeinrichtung 10 um etwa dreissig Umdrehungen im Windungssinn dieser Feder gedreht, wonach die Zahnräder 31 und 32 mit den L-förmigen Verzahnungen 33 und 34 in Eingriff gebracht werden. Beim Verstellen der Kassettenhalteeinrichtung 10 von der Ladeposition in die Betriebsposition dreht sich die Welle 27 samt den Zahnrädern 31 und 32 um etwa drei Umdrehungen, was bedeutet, dass die Vorspannung der Schraubendrehfeder 28 lediglich um etwa 10% sinkt.

Wie erwähnt, greift an der Kassettenhalteeinrichtung 10 eine Verstelleinrichtung an, die mit dem Bezugszeichen 37 versehen ist. Die Verstelleinrichtung 37 weist einen in Richtung eines Doppelpfeiles 38 in entgegengesetzten Richtungen längsverschieblich geführten Verstellschieber 39 auf, der in den Figuren 2 bis 4 nur teilweise dargestellt ist und dessen motorischer Antrieb nachfolgend noch detailliert beschrieben ist. Der Verstellschieber 39 ist zwischen einer in Fig. 2 dargestellten Ruheposition und einer in Fig. 4 dargestellten Zwischenposition und zwischen letzterer und einer ebenfalls in Fig. 4, aber mit punktierten Linien dargestellten Verstellposition verstellbar. Der Verstellschieber 39 weist an seinem der Frontwand 3 zugewandten Ende eine Verzahnung 40 auf. Die Verzahnung 40 treibt bei der Verstellung des Verstellschiebers 39 von seiner Ruheposition in seine Zwischenposition ein Zahnrad 41 der Verstelleinrichtung 37 an, das auf einer Welle 42 drehfest befestigt ist. Die Welle 42 ist in der Führungsplatte 17 drehbar gelagert. Auf der Welle 42 ist ferner ein Verstellhebel 43 der Verstelleinrichtung 37 drehfest befestigt, der mit einem von der Seitenwand 12 der Kassettenhalteeinrichtung 10 zur Führungsplatte 17 hin abstehenden Verstellstift 44 zusammenwirkt. Auf diese Weise greift die Verstelleinrichtung 37 mit ihrem Verstellhebel 43 über den Verstellstift 44 an der Kassettenhalteeinrichtung 10 an. Bei in ihrer Ladeposition befindlicher Kassettenhalteeinrichtung 10 ist der Verstellstift 44 unter der Kraft der Schraubendrehfeder 28, die danach trachtet, die Kassettenhalteeinrichtung aus ihrer Ladeposition zu verstellen, an den Verstellhebel 43 angelegt gehalten, der seinerseits über den Verstellschieber 39 festgehalten ist. Somit wird in diesem Fall die Kassettenhalteeinrichtung 10 von der Verstelleinrichtung 37 entgegen der Kraft der Schraubendrehfeder 28 in ihrer Ladeposition festgehalten. Selbstverständlich könnte aber auch eine separate lösbare Arretiereinrichtung vorgesehen sein, beispielsweise ein händisch oder elektromagnetisch verstellbarer Riegel, mit dem die Kassettenhalteeinrichtung in ihrer Ladeposition festgehalten wird.

Wenn sich die Kassettenhalteeinrichtung 10 in ihrer Ladeposition befindet, ist in dieselbe eine Kassette 2 in Richtung des Pfeiles 5 von Hand aus einschiebbar. Dieses Einschieben erfolgt solange, bis die Kassette 2 mit ihrer Stirnseite 45 gegen zwei Lappen 46 und 47 stösst, die von den Bodenwandabschnitten 14 und 15 in Richtung zur Deckenwand 13 abstehen. Auf eine eingeschobene Kassette 2 drücken von oben her zwei an der Deckenwand 13 durch Kleben oder Ultraschweissen befestigte metallene Blattfedern 48 und 49, so dass die eingeschobene Kassette 2 bei in ihrer Ladeposition befindlicher Kassettenhalteeinrichtung 10 sicher mit ihrer unteren Hauptwand an den Bodenwandabschnitten 14 und 15 anliegt. Diese Situation ist in den Figuren 2 und 3 dargestellt, wobei die Kassette 2 der Übersichtlichkeit halber nur mit einer strichpunktierten Linie angedeutet ist.

Nachdem eine Kassette 2 vollständig in die Kassettenhalteeinrichtung 10 eingeschoben ist, wird der Verstellschieber 39 der Verstelleinrichtung 37 von seiner Ruheposition in seine Zwischenposition auf nachstehend noch beschriebene Weise verschoben, wobei der Verstellschieber 39 über seine Verzahnung 40 und das damit kämmende Zahnrad 41 den Verstellhebel 43 gemäss Fig. 2 im Uhrzeigersinn antreibt. Hierdurch wird der Verstellstift 44 und folglich die gesamte Kassettenhalteeinrichtung 10 zur Verstellung mit der Schraubendrehfeder 28 freigegeben. Die vorgespannte Schraubendrehfeder 28 treibt mit ihrer Vorspannung die Welle 27 und die beiden Zahnräder 31 und 32 gemäss Fig. 2 im Uhrzeigersinn an, so dass sich die Zahnräder 31 und 32 an den feststehenden Verzahnungen 33 und 34 abwälzen, wobei sie in Freistellungen in den Führungsplatten 16 und 17 eintreten, und dabei die entlang der L-förmigen Bewegungsbahn geführte Kassettenhalteeinrichtung 10 von ihrer Ladeposition in ihre Betriebsposition verstellen. Bei dieser Verstellung stützt sich der Verstellstift 44 am Verstellhebel 43 ab, wodurch eine durch die Verstellbewegung des motorisch angetriebenen Verstellhebels 43 der Verstelleinrichtung 37 bestimmte gleichmässige Verstellbewegung für die Kassettenhalteeinrichtung 10 erreichtwird. In der Betriebsposition der Kassettenhalteeinrichtung 10 stösst dieselbe mit ihren beiden Bodenwandabschnitten 14 und 15 gegen vier je mit dem Bezugszeichen 50 bezeichnete Anschläge, die die Betriebsposition festlegen, und die Schraubendrehfeder 28 hält mit ihrer Vorspannung die Kassettenhalteeinrichtung 10 gegen die Anschläge 50 sicher angelegt. Bei in der Betriebsposition gehaltener Kassetteneinrichtung 10 wird die hierbei in ihrer Betriebslage befindliche Kassette 2 von vier je mit dem Bezugszeichen 51 bezeichneten Positionieranschlägen unterstützt, wobei die Kassette 2 mit den Blattfedern 48 und 49 sicher an die Positionieranschläge 51 angelegt gehalten ist. Diese Situation ist in Fig. 4 dargestellt.

Um die Kassettenhalteeinrichtung 10 von ihrer Betriebsposition in ihre Ladeposition zurückzuverstellen, wird der Verstellschieber 39 von seiner Zwischenposition in seine Ruheposition verschoben, wodurch über seine Verzahnung 40 und das damit in Eingriff stehende Zahnrad 41 der Verstellhebel 43 gemäss Fig. 4 entgegen dem Uhrzeigersinn angetrieben wird und dieser über den Verstellstift 44 die Kassettenhalteeinrichtung entgegen der Kraft der Schraubendrehfeder 28 entlang der L-förmigen Bewegungsbahn in ihre Ladeposition zurückverstellt. Sobald die Kassettenhalteeinrichtung ihre in Fig. 2 dargestellte Ladeposition erreicht hat, wird der Antrieb für den Verstellschieber 39 abgeschaltet, und zwar, wie später noch beschrieben ist, über einen von der Kassettenhalteeinrichtung 10 in deren Ladeposition betätigten Endschalter. Die Ladeposition der Kassettenhalteeinrichtung 10 ist daher durch die Verstelleinrichtung 37 über deren Verstellhebel 43 festgelegt.

Wie vorstehend beschrieben, wird eine in das Gerät 1 eingesetzte Kassette 2 mit Hilfe der Kassettenhalteeinrichtung 10 in ihre Betriebslage abgesenkt. Wie in Fig. 5 schematisch gezeigt ist, treten hierbei mit den beiden nebeneinander liegenden, rotierend antreibbaren Wickelkernen der Kassette 2, die mit den Bezugszeichen 52 und 53 bezeichnet sind und zwischen denen das Magnetband 54 innerhalb der Kassette 2 entlang dem teilweise durch eine strichpunktierte Linie 55 angegebenen Verlauf verläuft und auf die das Magnetband korrespondierend zu seiner jeweiligen Fortbewegungsrichtung wahlweise und in entgegengesetztem Wickelsinn, wie dies mit den Pfeilen 52a und 53a angegeben ist, aufwickelbar ist, zwei Wickeldorne 56 und 57 in Antriebsverbindung, so dass mit den Wickeldornen 56 und 57 die beiden koaxial auf dieselben aufgesetzten Wickelkerne 52 und 53 rotierend antreibbar sind.

Zum Antreiben der beiden Wickeldorne 56 und 57 ist eine in Fig. 5 schematisch angedeutete, eine Bandlaufbetriebseinrichtung bildende Wickeltellerantriebseinrichtung 58 vorgesehen, die mit dem Verstellschieber 39 zwischen zwei Betriebspositionen verstellbar ist, wie nachfolgend noch beschrieben ist. Die Wickeltellerantriebseinrichtung 58, die während ihres Betriebes einen Bandlaufbetrieb bewirkt, weist ein in entgegengesetzten Drehrichtungen motorisch antreibbares, ortsfestes Treibrad 59 auf, das ein verschwenkbares Abtriebsrad 60 antreibt, das korrespondierend zu seiner Drehrichtung wahlweise mit einem von zwei mit den Wickeldornen 56 und 57 drehfest verbundenen Wickeltellern 61 und 62 in Antriebsverbindung bringbar ist. Die Wickeltellerantriebseinrichtung 58 wird nachfolgend anhand der Fig. 7 detailliert beschrieben.

Beim Absenken der Kassette 2 in ihre Betriebslage wird ein an der Stirnseite 45 derselben vorgesehener, nicht dargestellter Kassettenverschlussdeckel geöffnet, wodurch eine Kassettenöffnung in der Stirnseite freigegeben wird und ferner treten vier Bandführungen 63, 64, 65 und 66 und eine Andruckrolle 67, die sich hierbei je in einer in Fig. 5 mit strichpunktierten Linien dargestellten Ruhelage befinden, in zwei Ausnehmungen der Kassette 2 ein, wobei sie den entlang der strichpunktierten Linie 55 verlaufenden Abschnitt des Magnetbandes 54 hintergreifen. Nach erfolgtem Absenken der Kassette in ihre Betriebslage sind die Bandführungen 63, 64, 65 und 66 je in ihre in Fig. 5 mit vollen Linien dargestellte Betriebslage verstellbar, wobei auch die Andruckrolle in eine in Fig. 5 nicht dargestellte Zwischenlage in unmittelbarer Nähe einer Bandantriebswelle 68 verstellbar ist. Dabei wird das Magnetband 54 durch die Kassettenöffnung in der Stirnseite 45 der Kassette 2 hindurch aus derselben herausgeführt. Aus der Zwischenlage ist die Andruckrolle 67 in ihre in Fig. 5 dargestellte Betriebslage verstellbar, in der sie das Magnetband 54 an die Bandantriebswelle 68 andrückt. Da die Einrichtungen zum Öffnen des Kassettenverschlussdeckels, zum Verstellen der Bandführungen 63 und 66 und der Andruckrolle 67 und zum Andrücken der Andruckrolle 67 an die Bandantriebswelle 68 für die vorliegende Erfindung nicht wesentlich sind, sind diese auch der Einfachheit halber nicht dargestellt. Derartige Einrichtungen sind an sich aus bestehenden Geräten dieser Art allgemein bekannt.

Die Bandführungen 64 und 65 sind Bestandteile einer Bandfädeleinrichtung 69, die zum Herausführen des Magnetbandes 54 aus der in ihrer Betriebslage befindlichen Kassette 2 und zum Herumschlingen desselben um eine trommelförmige Abtasteinrichtung 70 für das Magnetband vorgesehen ist. Die Bandfädeleinrichtung 69 ist zwischen einer in Fig. 5 mit strichpunktierten Linien dargestellten Ausfädelposition, in der sie mit ihren Bandführungen 64 und 65 das in der Kassette 2 untergebrachte Magnetband 54 hintergreift, und einer in Fig. 5 mit vollen Linien dargestellten Einfädelposition, in der sie das bei ihrer Verstellung in Richtung des Pfeiles 71 von ihrer Ausfädelposition in ihre Einfädelposition aus der Kassette 2 herausgeführte Magnetband 54 mit ihren Bandführungen 64 und 65 um die Abtasteinrichtung 70 herumgeschlungen hält, verstellbar. Die Bandfädeleinrichtung 69 besteht im wesentlichen aus einem um die Abtasteinrichtung 70 drehbaren Ring 72, auf dem die Bandführung 64 im wesentlichen ortsfest und die Bandführung 65 über einen nicht dargestellten, gegenüber dem Ring in Umfangsrichtung desselben verstellbaren Träger angebracht ist, wie dies an sich aus der DE-AS 20 46 494 bekannt ist. Der Ring 72 weist an seiner umfangsseitigen Stirnseite eine Verzahnung 73 auf, über die derselbe in entgegengesetzten Richtungen rotierend antreibbar ist, wie dies nachfolgend noch beschrieben ist. Zur Festlegung der Ausfädelposition und der Einfädelposition der Bandfädeleinrichtung 69 sind am Ring 72 derselben ein radial abstehender Anschlag 74 und im Gerät zwei ortsfeste Gegenanschläge 75 und 76 vorgesehen, wobei sich der Anschlag 74 in der Ausfädelposition am Gegenanschlag 75 und in der Einfädelposition am Gegenanschlag 76 abstützt.

Nach einer Verstellung der Bandführungen 63, 64, 65 und 66 und der Andruckrolle 67 in ihre Betriebslagen nimmt das Magnetband 54 den in Fig. 5 mit einer vollen Linie dargestellten Verlauf ein. Dabei erstreckt sich das Magnetband 54 vom Wickelkern 52 über zwei in der Kassette enthaltene Bandführungen, einen Bandspannungsfühler 77, die verstellbaren Bandführungen 63, 65 und 64, einen ortsfesten Magnetkopf 78 zum Löschen aller auf dem Magnetband aufgezeichneten Signale, die trommelförmige Abtasteinrichtung 70, die rotierend antreibbare Magnetköpfe zum Aufzeichnen und Wiedergeben von Fernsehsignalen in und aus schräg zur Längsrichtung des Magnetbandes verlaufenden, nebeneinander liegenden Spuren enthält, eine ortsfeste Bandführung 79, einen ortsfesten Magnetkopf 80 zum Löschen von Tonsignalen in einer in Längsrichtung des Magnetbandes verlaufenden Tonspur, einen weiteren ortsfesten Magnetkopf 81 zum Aufzeichnen und Wiedergeben von Tonsignalen in der Tonspur und zum Aufzeichnen und Wiedergeben von Synchronisationssignalen in einer in Längsrichtung des Magnetbandes und parallel neben der Tonspur verlaufenden Synchronspur, die Bandantriebswelle 68, an die das Magnetband 54 mit der Andruckrolle 67 angedrückt ist, die verstellbare Bandführung 66, eine ortsfeste Bandführung 82 und zwei weitere in der Kassette enthaltene Bandführungen bis zum Wickelkern 62. Sobald das Magnetband den vorstehend beschriebenen Verlauf einnimmt, wobei sich selbstverständlich die Kassettenhalteeinrichtung 10 in ihrer Betriebsposition befindet, kann in bekannter Weise ein Aufzeichnungs- oder Wiedergabevorgang von Fernsehsignalen und Tonsignalen erfolgen.

Beim Aufzeichnen und Wiedergeben von Fernsehsignalen ist die Bandantriebswelle 68, die in üblicher Weise mit einer nicht dargestellten Schwungscheibe verbunden ist, wahlweise in einer von beiden Drehrichtungen mit konstanter Drehzahl antreibbar. Auf diese Weise ist bei an die Bandantriebswelle 68 angedrückter Andruckrolle 67 das Magnetband 54 wahlweise in einer von zwei zueinander entgegengesetzten Fortbewegungsrichtungen mit konstanter Fortbewegungsgeschwindigkeit antreibbar. Beim Antreiben der Bandantriebswelle 68 mit vorgegebener Drehzahl entgegen dem Uhrzeigersinn wird das Magnetband 54 in Richtung des Pfeiles 83 angetrieben, was dem sogenannten "Normalen Vorlauf" entspricht, bei dem das Aufzeichnen der Signale und auch die normale Wiedergabe derselben erfolgt. Wenn die Bandantriebswelle 68 mit gleicher Drehzahl, aber im Uhrzeigersinn angetrieben wird, dann wird das Magnetband 54 entgegen der Richtung des Pfeiles 83 angetrieben, was dem sogenannten "Normalen Rücklauf" entspricht, der auch als "Reverse-Lauf" bezeichnet wird, bei dem eine Wiedergabe der Fernsehsignale zur Erzeugen von rückläufigen Bewegungsabläufen erfolgt.

Wenn das Magnetband 54 im "Normalen Vorlauf" von der mit der Andruckrolle 67 zusammenwirkenden Bandantriebswelle 68 in Richtung des Pfeiles 83 angetrieben wird, dann wird die Wickeltellerantriebseinrichtung 58 mit dem Wickelteller 62 zum Antreiben des Wickeldornes 57 und damit des Wickelkernes 53 in Antriebsverbindung gebracht, um das Magnetband 54 auf den Wickelkern 53 aufzuwickeln, wie dies in den Figuren 5 und 7 gezeigt ist. Wenn das Magnetband 54 im "Reverse-Lauf" von der mit der Andruckrolle 67 zusammenwirkenden Bandantriebswelle 68 entgegen der Richtung des Pfeiles 83 angetrieben wird, dann wird die Wickeltellerantriebseinrichtung 58 mit dem Wickelteller 61 zum Antreiben des Wickeldornes 56 und damit des Wickelkernes 52 in Antriebsverbindung gebracht, um das Magnetband 54 auf den Wickelkern 52 aufzuwickeln, wie dies in Fig. 7 mit einer punktierten Linie angedeutet ist. Bei vorliegendem Gerät wirken beim "Normalen Vorlauf" auf den zwischen der Bandantriebswelle 68 und dem Wickelkern 53 verlaufenden Bandabschnitt und beim "Reverse-Lauf" auf den zwischen der Bandantriebswelle 68 und dem Wickelkern 52 verlaufenden Bandabschnitt unterschiedlich grosse Reibungskräfte ein. Dies deshalb, weil mit dem erstgenannten Bandabschnitt nur vier Bandführungen zusammenwirken, wogegen mit dem zweitgenannten Bandabschnitt sieben Bandführungen, drei feststehende Magnetköpfe und die trommelförmige Abtasteinrichtung zusammenwirken- Aufgrund der unterschiedlich grossen Reibungskräfte ist es zur Erzielung eines stets einwandfreien Aufwickelns des Magnetbandes auf den betreffenden Wickelkern bei an sich möglichst geringem Leistungsaufwand vorteilhaft, den Wickelkern 53 im "Normalen Vorlauf" mit einem vorgegebenen ersten Drehmoment und den Wickelkern 52 im "Reverse-Lauf" mit einem vorgegebenen zweiten, gegenüber dem ersten Drehmoment grösseren Drehmoment anzutreiben, wodurch eine Anpassung an die unterschiedlichen Bandbelastungen aufgrund der unterschiedlich grossen Reibungskräfte erreicht wird. Dies wird in einfacher Weise mit der in Fig. 7 dargestellten Wickeltellerantriebseinrichtung 58 erreicht, wie nachfolgend noch beschrieben ist.

Wie erwähnt, sind im Gerät 1 auch die Betriebsarten "Schneller Vorlauf" und "Schneller Rücklauf" einschaltbar, wobei das Magnetband 54 mit erhöhter Fortbewegungsgeschwindigkeit zwischen den Wickelkernen 52 und 53 umgespult wird. Dieses Umspulen erfolgt in üblicher Weise bei von der Bandantriebswelle 68 abgehobener Andruckrolle 67. Zum Umspulen wird durch entsprechende Rückverstellung der verstellbaren Bandführungen 63, 64, 65 und 66 und der Andruckrolle 67 das Magnetband 54 vollständig in die Kassette 2 zurückgeführt, wobei es dann den mit der strichpunktierten Linie 55 angegebenen Verlauf einnimmt. Es wäre aber auch möglich, beim Umspulen die Andruckrolle 67 nur bis in ihre Zwischenlage zu verstellen und die verstellbaren Bandführungen 63, 64, 65 und 66 je in ihrer Beiriebslage zu belassen. Beim Umspulen wirken unabhängig von der Fortbewegungsrichtung des Magnetbandes stets praktisch dieselben Reibungskräfte auf das Magnetband 54 ein, so dass in diesem Fall der Antrieb der beiden Wickeldorne 56 und 57 in beiden Betriebsarten mit demselben Drehmoment erfolgen kann. Auch in diesen beiden Betriebsarten sind die beiden Wickeldorne 56 und 57 von der Wickeltellerantriebseinrichtung 58 antreibbar, die in der Betriebsart "Schneller Vorlauf" mit dem Wickelteller 62 und in der Betriebsart "Schneller Rücklauf" mit dem Wickelteller 61 in Antriebsverbindung bringbar ist, was ebenfalls noch nachfolgend beschrieben ist.

An dieser Stelle sei erwähnt, dass eine Wickeltellerantriebseinrichtung 58, wie sie in vorliegendem Gerät vorgesehen ist, an sich bereits in der älteren österreichischen Patentanmeldung A 581/85 detailliert beschrieben ist, weshalb im folgenden nur eine kurzgefasste Beschreibung erfolgt. Die zwischen zwei Betriebspositionen verstellbare Wickeltellerantriebseinrichtung 58 ist in Fig. 7 dargestellt, wobei aber die Lagerungen der Welle in einer gerätefesten Chassisplatte nicht dargestellt sind, um die Zeichnung einfacher zu halten. Die Wickeltellerantriebseinrichtung 58 weist einen inseiner Drehrichtung umkehrbaren Motor 84 auf. mit dem eine erste Riemenscheibe 85 antreibbar ist. Die Riemenscheibe 85 treibt über einen Riemen 86 eine zweite Riemenscheibe 87 an, die über eine Welle 88 mit einem Umschaltzahnrad 89 drehfest verbunden ist, das entsprechend den beiden Betriebspositionen der Wickeltellerantreibseinrichtung 58 mittels des Verstellschiebers 39 verstellbar ist. Die Welle 88 ist auf einer um eine Welle 90 verschwenkbaren Scheibe 91 drehbar gelagert, wobei die Welle 88 exzentrisch gegenüber der Welle 90 angeordnet ist. Die Scheibe 91 trägt einen im wesentlichen kreissektorförmigen Zahnscheibenteil 92, der auch von der Welle 88 durchsetzt ist und der an seiner Stirnfläche eine Verzahnung aufweist, die mit einem um eine Welle 93 verdrehbaren Verstellzahnrad 94 ständig in Eingriff steht. Das Verstellzahnrad 94 ist von einer Verzahnung 95 her antreibbar, die an einem Ende eines um eine Welle 96 verschwenkbaren Verstellhebels 97 vorgesehen ist. Der Verstellhebel 97 trägt zwei Stifte 98 und 99, zwischen denen eine Blattfeder 100 eingespannt ist, die sich mit ihrem der Verzahnung 95 zugewandten Ende an einem feststehendem Stift 101 abstützt und deren anderes Ende in den Bewegungsbereich eines vom Verstellschieber 39 abstehenden, L-förmig ausgebildeten Verstellfortsatzes 102 ragt. Der Verstellfortsatz 102 und der in Fig. 7 nur teilweise dargestellte Verstellschieber 39 sind entsprechend der Ruheposition, der Zwischenposition und der Verstellposition des Verstellschiebers mit strichpunktierten, vollen und punktierten Linien in Fig. 7 dargestellt.

Bei in der Ruheposition befindlichem Verstellschieber 39 liegt der Verstellfortsatz 102 mit Abstand von der Blattfeder 100 und der Verstellhebel 97 stützt sich unter der Kraftwirkung der Blattfeder 100 am Stift 101 ab. Bei in der Zwischenposition befindlichem Verstellschieber 39 liegt der Verstellfortsatz 102 an der Blattfeder 100 an, ohne aber über die Blattfeder eine Verstellung des Verstellhebels 97 zu bewirken. In dieser Zwischenposition des Verstellschiebers 39 nehmen der Verstellhebel 97, das Verstellzahnrad 94, der Zahnscheibenteil 92 samt der Scheibe 91 sowie das Umschaltzahnrad 89 und die zweite Riemenscheibe 87 die in Fig. 7 dargestellten Lagen ein. Dies entspricht der ersten Betriebsposition der Wickeltellerantriebseinrichtung 58, in der die Betriebsarten "Schneller Vorlauf" und "Schneller Rücklauf" durchführbar sind. Durch Verschieben des Verstellschieber 39 in seine punktiert dargestellte Verstellposition wird über die Blattfeder 100 der Verstellhebel 97 in Richtung des Pfeiles 103 verschwenkt, wobei dann über das Verstellzahnrad 94 der Zahnscheibenteil 92 samt der Scheibe 91 in Richtung des Pfeiles 104 verschwenkt wird. Dabei werden die zweite Riemenscheibe 87 und das Umschaltzahnrad 89 mitverschwenkt, und zwar solange, bis das Umschaltzahnrad 89 eine in Fig. 7 mit punktierten Linien dargestellte Lage erreicht, in der es mit einem ersten Antriebszahnrad 105 der Wickeltellerantriebseinrichtung 58 in Eingriff steht, wonach der Antrieb des Verstellschiebers 39 automatisch abgeschaltet wird, wie nachfolgend noch beschrieben ist. Dies entspricht der zweiten Betriebsposition der Wickeltellerantriebseinrichtung 58, in der die Betriebsarten "Normaler Vorlauf" und "Reverse-Lauf" durchführbar sind.

Das erste Antriebszahnrad 105 ist somit bei in ihrer zweiten Betriebsposition befindlicher Wickeltellerantriebseinrichtung 58 in den Betriebsarten "Normaler Vorlauf" und "Reverse-Lauf" über das Umschaltzahnrad 89 und den Riemenantrieb 85, 86 und 87 korrespondierend zur gewählten Drehrichtung des Motors 84 wahlweise in einer von zwei Drehrichtungen antreibbar. Das erste Antriebszahnrad 105 ist auf einer rohrförmigen Hülse 106 drehbar gelagert, die an einem zweiten Antriebszahnrad 107 angeformt ist. Auf diese Weise sind die beiden Antriebszahnräder 105 und 107 koaxial zueinander und gegenüber einander verdrehbar gelagert. Zwischen den beiden Antriebszahnrädern 105 und 107 ist eine nur schematisch dargestellte, in der vorerwähnten österreichischen Patentanmeldung A 581/85 detailliert beschriebene Kupplungseinrichtung 108 vorgesehen, über die das zweite Antriebszahnrad 107 vom ersten Antriebszahnrad 105 in den Betriebsarten "Normaler Vorlauf" und "Reverse-Lauf" antreibbar ist.

Die Kupplungseinrichtung 108 besteht im wesentlichen aus zwei zwischen und koaxial zu den beiden Antriebszahnrädern 105 und 107 angeordneten, in Kraftflussrichtung hintereinander liegenden Rutschkupplungen, die zur Übertragung von unterschiedlich grossen Drehmomenten ausgebildet sind, und einer Ein-Richtungs-Kupplung, mit der bei der mit dem Pfeil 109 angegebenen Drehrichtung des ersten Antriebszahnrades 105 und damit der gesamten Kupplungseinrichtung 108 die Rutschkupplung zur Übertragung des kleineren Drehmoments überbrückbar ist.

Das zweite Antriebszahnrad 107 ist über seine angeformte Hülse 106 und eine in diese Hülse 106 eingepresste weitere Hülse 110 mit dem als Zahnrad ausgebildeten Treibrad 59, am dem die weitere Hülse 110 angeformt ist, drehfest verbunden. Das zweite Antriebszahnrad 107 und das damit drehfest verbundene Treibrad 59 sind auf einer Welle 111 drehbar gelagert. Am freien Ende der Welle 111 ist ferner ein Hebel 112 schwenkbar gelagert, an dem über eine Welle 113 das ebenfalls als Zahnrad ausgebildete Abtriebsrad 60 drehbar gelagert ist, das mit dem Treibrad 59 ständig in Eingriff steht. In Abhängigkeit von der Drehrichtung des Treibrades 59 wird aufgrund der Trägheits- und Reibungsverhältnisse das mit dem Treibrad 59 in Eingriff stehende Abtriebsrad 60 selbsttätig in entgegengesetzten Richtungen verschwenkt, wobei dasselbe mit einem von den beiden Wickeltellern 61 und 62, die ebenfalls als Zahnräder ausgebildet sind, in Eingriff kommt. Auf diese Weise ist das zweite Antriebszahnrad 107 korrespondierend zu seiner Drehrichtung über das Treibrad 59 und das Abtriebsrad 60 sowie einem der beiden Wickelteller 61 und 62 wahlweise mit einem der beiden Wickeldorne 56 und 57 in Antriebsverbindung bringbar.

Bei der in Fig. 7 mit vollen Linien dargestellten, der ersten Betriebsposition der Wickeltellerantriebseinrichtung 58 entsprechenden Lage des Umschaltzahnrades 89, die dasselbe in den Betriebsarten "Schneller Vorlauf" und "Schneller Rücklauf" einnimmt, steht dasselbe mit einem ersten Zwischengelegezahnrad 114 in Eingriff, das über eine Welle 115 mit einem zweiten Zwischengelegezahnrad 116 drehfest verbunden ist. Das zweite Zwischengelegezahnrad 116 steht mit dem zweiten Antriebszahnrad 107 ständig in Eingriff, so dass in den Betriebsarten "Schneller Vorlauf" und "Schneller Rücklauf" das zweite Antriebszahnrad 107 vom Umschaltzahnrad 89 über die beiden Zwischengelegezahnräder 114 und 116 unter Umgebung des ersten Antriebszahnrades 105 und der Kupplungseinrichtung 108 direkt antreibbar ist.

In der Betriebsart "Normaler Vorlauf", wobei das Umschaltzahnrad 89 von dem in seiner in Fig. 7 mit punktierten Linien dargestellten Verstellposition befindlichen Verstellschieber 39 mit dem ersten Antriebszahnrad 105 in Eingriff gebracht ist, wird die erste Riemenscheibe 85 vom Motor 84 entgegen dem Uhrzeigersinn mit vorgegebener Drehzahl angetrieben und diese Drehbewegung über den Riemen 86, die zweite Riemenscheibe 87 und das Umschaltzahnrad 89 auf das erste Antriebszahnrad 105 übertragen, das dann im Uhrzeigensinn rotiert. Das erste Antriebszahnrad 105 treibt über die Rutschkupplungseinrichtung 108 das zweite Antriebszahnrad 107 an, wobei die Ein-Richtungs-Kupplung ausgeschaltet bleibt und das Durchrutschen bei der Rutschkupplung zur Übertragung des kleineren Drehmomentes auftritt und sich die andere Rutschkupplung zur Übertragung des grösseren Drehmoments wie eine drehfeste Kupplungsverbindung verhält. Das übertragene Drehmoment ist somit durch die Rutschkupplung zur Übertragung des kleineren Drehmomentes bestimmt und weist somit einen kleineren Wert auf. Das auf das zweite Antriebszahnrad 107 übertragene Drehmoment wird über die Hülse 106 und die Hülse 110 auf das Treibrad 59 und von diesem auf das Abtriebsrad 60 übertragen, das dabei entgegen dem Uhrzeigensinn rotiert. Aufgrund dieser Rotation wird das Abtriebsrad 60 selbsttätig zum Wickelteller 62 hin verschwenkt und mit diesem in Eingriff gebracht, wodurch der Wickelteller 62 und damit der Wickeldorn 57 und der Wickelkern 53 entsprechend dem mit der Rutschkupplungseinrichtung 108 übertragenen kleineren Drehmoment angetrieben wird. In der Beiriebsart "Reverse-Lauf", wobei das Umschaltzahnrad 89 ebenso wie in der Betriebsart "Normaler Vorlauf" von dem in seiner Verstellposition befindlichen Verstellschieber 39 mit dem ersten Antriebszahnrad 105 in Eingriff gebracht ist, wird die erste Riemenscheibe 85 vom Motor 84 mit derselben Drehzahl wie in der Betriebsart "Normaler Vorlauf", jedoch im Uhrzeigersinn angetrieben und diese Drehbewegung über den Riemen 86, die zweite Riemenscheibe 87 und das Umschaltzahnrad 89 auf das erste Antriebszahnrad 105 übertragen, welches dann entgegen dem Uhrzeigersinn rotiert. Das erste Antriebszahnrad 105 treibt über die Rutschkupplungseinrichtung 108 das zweite Antriebszahnrad 107 an, wobei dann die Ein-Richtungs-Kupplung eingeschaltet und die Rutschkupplung zur Übertragung des kleineren Drehmomentes überbrückt ist und das Durchrutschen bei der Rutschkupplung zur Übertragung des grösseren Drehmomentes auftritt, so dass das übertragene Drehmoment einen grösseren Wert aufweist. Das auf das zweite Antriebszahnrad 107 übertragene grössere Drehmoment wird von diesem über die Hülse 106 und die Hülse 110 auf das Treibrad 59 und von diesem auf das Abtriebsrad 60 übertragen, das dabei im Uhrzeigersinn rotiert und dadurch selbsttätig mit dem Wickelteller 61 in Eingriff gebracht wird und diesen antreibt. Auf diese Weise wird der Wickeldorn 56 und damit der Wickelkern 52 entsprechend dem mit der Rutschkupplungseinrichtung 108 übertragenen grösseren Drehmoment angetrieben.

In der Betriebsart "Schneller Vorlauf", wobei dann der Verstellschieber 39 seine in Fig. 7 mit vollen Linien dargestellte Zwischenposition einnimmt und der Verstellhebel 97 sich an dem gerätefesten Stift 101 abstützt und das Umschaltzahnrad 89 mit dem ersten Zwischengelegenzahnrad 114 in Eingriff steht, wird die erste Riemenscheibe 85 vom Motor 84 ebenso wie in der Betriebsart "Reverse-Lauf" im Uhrzeigersinn, jedoch mit höherer Drehzahl angetrieben. Diese Drehbewegung wird über den Riemen 86 und die zweite Riemenscheibe 87 auf das Umschaltzahnrad 89 und von diesem über das erste Zwischengelegenzahnrad 114 und das zweite Zwischengelegenzahnrad 116 direkt auf das zweite Antriebszahnrad 107 und von diesem auf das Abtriebsrad 60 übertragen, welches dann entgegen dem Uhrzeigensinn rotiert und aufgrund dieser Rotation mit dem Wickelteller 62 in Eingriff gebracht wird und diesen mit höherer Drehzahl antreibt. In der Betriebsart "Schneller Rücklauf", wobei der Verstellschieber 39 ebenfalls seine Zwischenposition einnimmt, wird die Drehrichtung des Motors 84 gegenüber der Betriebsart "Schneller Vorlauf" umgekehrt, wobei dann über die gleiche Antriebsverbindung wie in der Betriebsart "Schneller Vorlauf" das Abtriebsrad 60 im Uhrzeigensinn angetrieben wird, wobei dasselbe mit dem Wickelteller 61 in Eingriff kommt und diesen mit höherer Drehzahl antreibt. In den Betriebsarten "Schneller Vorlauf" und "Schneller Rücklauf" werden die beiden Wickeldorne 56 und 57 mit demselben vom Motor 84 bestimmten Drehmoment angetrieben.

Zum Verstellen von sowohl der Kassettenhalteeinrichtung 10 zwischen ihrer Ladeposition und ihrer Betriebsposition als auch der Bandfädeleinrichtung 69 zwischen ihrer Ausfädelposition und ihrer Einfädelposition sowie auch der eine Bandlaufbetriebseinrichtung bildenden Wickeltellerantriebseinrichtung 58 zwischen ihren beiden Betriebspositionen weist das Gerät 1 ein von einem Motor 117 in entgegengesetzten Drehrichtungen antreibbares Differentialgetriebe 118 auf, wie aus den Figuren 5 und 6 ersichtlich ist. Der Motor 117 treibt über seine schematisch mit einer strichpunktierten Linie dargestellte Motorwelle 119 eine Schnecke 120 an, die ein auf einer Welle 121, die in einer Chassisplatte 122 drehbar gelagert ist, drehbar gelagertes Schneckenrad 123 antreibt. Das Schneckenrad 123 bildet einen Planetenradträger des Differentialgetriebes 118 für vier Planetenräder 124, die je auf einer im Schneckenrad 123 drehbar gelagerten Welle sitzen. Die vier Planetenräder 124 stehen in Eingriff mit zwei zum Schneckenrad 123 koaxialen Zahnrädern 125 und 126, die den gleichen Durchmesser, aber unterschiedliche Zähnezahl aufweisen. Die Verzahnungen der beiden Zahnräder 125 und 126 sind profilverschoben ausgebildet und die Zähnezahl des Zahnrades 125 ist etwas grösser gewählt als die Zähnezahl des Zahnrades 126. Das Zahnrad 126 ist auf der Welle 121 drehbar gelagert und ist einstückig mit einem ersten Ausgangszahnrad 127 verbunden, das einen kleineren Durchmesser als das Zahnrad 126 aufweist und das einen ersten Ausgang des Differentialgetriebes 118 bildet. Das Zahnrad 125 sitzt drehfest auf der Welle 121 und ist über die Welle 121 mit einem ebenfalls drehfest auf der Welle 121 sitzenden zweiten Ausgangszahnrad 128 verbunden, das einen zweiten Ausgang des Differentialgetriebes 118 bildet. Das erste Ausgangszahnrad 127 steht mit einer Verzahnung 129 am Verstellschieber 39 in Eingriff und das zweite Ausgangszahnrad 128 steht mit der Verzahnung 73 des Ringes 72 der Bandfädeleinrichtung 69 in Eingriff.

Zum Ansteuern des Motors 117 ist eine schematisch dargestellte Steuerschaltung 130 vorgesehen. Ein solche Steuerschaltung ist vorzugsweise mit Hilfe eines Mikroprozessors aufgebaut, der das Anschalten und Abschalten der Versorgungsspannung V für den Motor 117 an denselben in Abhängigkeit von eingegebenen Befehlssignalen und von mit Fühlschaltern gewonnenen Überwachungssignalen steuert. Im vorliegenden Fall ist die Steuerschaltung 130 der Einfachheit halber stark vereinfacht dargestellt. Sie enthält einen zweipoligen Umschalter 131 und zwei mit dem Umschalter 131 in Serie geschaltete einpolige Schalter 132 und 133, die je als Ruhekontakte ausgebildet sind. In der in der Fig. 5 mit vollen Linien dargestellten Umschaltlage des Umschalters 131 wird der Motor 117 so angetrieben, dass das Schneckenrad 123 des Differentialgetriebes 118 gemäss Fig. 5 entgegen dem Uhrzeigersinn angetrieben wird, wobei dann die Kassettenhalteeinrichtung 10 von ihrer Ladeposition in ihre Betriebsposition und die Bandfädeleinrichtung 69 von ihrer Ausfädelposition in ihre Einfädelposition und die Wickeltellerantriebseinrichtung 58 von ihrer Betriebsposition für "Schnellen Vorlauf" und "Schnellen Rücklauf" in ihre Betriebsposition für "Normalen Vorlauf" und "Reverse-Lauf" verstellt werden. Wenn der Umschalter 131 in seiner in Fig. 5 mit punktierten Linien dargestellte Umschaltlage gebracht wird, dann wird der Motor 117 so angetrieben, dass das Schneckenrad 123 gemäss Fig. 5 im Uhrzeigersinn angetrieben wird, wobei dann die Wickeltellerantriebseinrichtung 58 von ihrer Betriebsposition für "Normalen Vorlauf" und "Reverse-Lauf" in ihre Betriebsposition für "Schnellen Vorlauf" und "Schnellen Rücklauf" und die Bandfädeleinrichtung 69 von ihrer Einfädelposition in ihre Ausfädelposition und die Kassettenhalteeinrichtung 10 von ihrer Betriebsposition in ihre Ladeposition verstellt werden. Der Schalter 132 ist von der Kassettenhalteeinrichtung 10 betätigbar, und zwar wird der Schalter 132 geöffnet, wenn die Kassettenhalteeinrichtung 10 ihre Ladeposition erreicht. Der Schalter 133 ist vom Verstellschieber 39 betätigbar, und zwar wird der Schalter 133 geöffnet, wenn der Verstellschieber 39 seine Verstellposition erreicht.

Im folgenden wird ein Ablauf von Funktionen beschrieben, die erforderlich sind, um danach eine Wiedergabe von auf dem Magnetband einer in das Gerät händisch eingesetzten Kassette gespeicherten Signalen vornehmen zu können. Nach dem händischen Einsetzen einer Kassette 2 in die Kassettenhalteeinrichtung 10 wird vom Benützer die Taste zum Einschalten der Betriebsart "Wiedergabe" des Tastensatzes 6 betätigt. Diese Tastenbetätigung hat eine Umschaltung des Umschalters 131 in die in Fig. 5 mit vollen Linien dargestellte Umschaltlage zur Folge. In diesem Fall wird der Stromkreis für den Motor 117 zwischen der Versorgungsspannung V und Bezugspotential über den geschlossenen Schalter 133 und den Umschalter 131 geschlossen. Der Schalter 132 ist zu diesem Zeitpunkt noch von der in ihrer Ladeposition befindlichen Kassettenhalteeinrichtung 10 in seiner geöffneten Lage gehalten. Vom Motor 117 wird über die Schnecke 120 das Differentialgetriebe 118 angetrieben, wobei das Schneckenrad 123 gemäss Fig. 5 entgegen dem Uhrzeigersinn rotiert und über die Planetenräder 124 danach trachtet, das erste Ausgangszahnrad 127 im Uhrzeigersinn und das zweite Ausgangszahnrad 128 entgegen dem Uhrzeigersinn anzutreiben. Die Drehrichtungen der beiden Ausgangszahnräder 127 und 128 ergeben sich aufgrund der gewählten Zähnezahl der mit den Planetenrädern 124 kämmenden Zahnräder 125 und 126. Zu diesem Zeitpunkt ist das erste Ausgangszahnrad 127 des Differentialgetriebes 118 durch die Kassettenhalteeinrichtung 10 und das zweite Ausgangszahnrad 128 durch die Bandfädeleinrichtung 69 belastet. Da die Kassettenhalteeinrichtung 10 von der Kraft der Schraubendrehfeder 28 so belastet ist, dass diese Belastung über den Verstellschieber 39 die Verdrehung des ersten Ausgangszahnrades 127 im Uhrzeigersinn unterstützt, bewirkt die Bandfädeleinrichtung 69 am zweiten Ausgangszahnrad 128 eine grössere Belastung als die Kassetienhalteeinrichtung 10 am ersten Ausgangszahnrad 127 des Differentialgetriebes. Folgedessen wird vom Differentialgetriebe 118 bei stillstehendem zweiten Ausgangszahnrad 128, wobei sich die Bandfädeleinrichtung 69 in ihrer Ausfädelposition befindet, über das erste Ausgangszahnrad 127 der Verstellschieber 39 aus seiner Ruheposition verstellt. Dabei wird über die Verzahnung 40 auch der Verstellhebel 43 verstellt und daher wird die Kassettenhalteeinrichtung 10 mit der Kraft der Schraubendrehfeder 28 von ihrer Ladeposition in ihre Betriebsposition verstellt. Nachdem die Kassettenhalteeinrichtung 10 ihre Ladeposition verlassen hat, wird der Schalter 132 geschlossen, was aber vorerst ohne Einfluss ist. Sobald die Kassettenhalteeinrichtung 10 ihre Betriebsposition erreicht hat, stützt sie sich an den Anschlägen 50 ab. Die Kraft der Schraubendrehfeder 28 wird somit nunmehr von den Anschlägen 50 aufgenommen und wirkt nicht mehr über das erste Ausgangszahnrad 127 auf das Differentialgetriebe 118 zurück. Zu diesem Zeitpunkt hat der Verstellschieber 39 seine Zwischenposition erreicht, in der sein Verstellfortsatz 102 mit der Blattfeder 100 in Kontakt tritt, ohne über die Blattfeder 100 schon eine Verstellung des Verstellhebels 97 zu bewirken. Die Blattfeder 100 bewirkt eine Belastung des ersten Ausgangszahnrades 127, die sich am ersten Ausgangszahnrad 127 als stärkere Belastung auswirkt als die durch die Bandfädeleinrichtung 69 am zweiten Ausgangszahnrad 128 bewirkte Belastung. Aufgrund der Belastung durch die Blattfeder 100 wird nunmehr der Verstellschieber 39 über das erste Ausgangszahnrad 127 des Differentialgetriebes 118 in seiner Zwischenposition angehalten und das Differentialgetriebe treibt über das zweite Ausgangszahnrad 128 den Ring 72 der Bandfädeleinrichtung 69 an, wobei sich die Bandfädeleinrichtung aus ihrer Ausfädelposition bewegt. Mit dieser Verstellung der Bandfädeleinrichtung ist die Verstellung der Andruckrolle 67 in ihre Zwischenlage in der Nähe der Bandantriebswelle 68 gekoppelt. Der Antrieb der Bandfädeleinrichtung 69 erfolgt solange, bis sich der am Ring 72 angebrachte Anschlag 74 am gerätefesten Gegenanschlag 76 abstützt, wobei dann der Ring 72 und folglich auch das zweite Ausgangszahnrad 128 des Differentialgetriebes 118 blockiert sind. Damit ist die Belastung des zweiten Ausgangszahnrades 128 grösser als die durch die Blattfeder 100 bewirkte Belastung des ersten Ausgangszahnrades 127 des Differentialgetriebes. Folgedessen wird nunmehr wieder das erste Ausgangszahnrad 127 des Differentialgetriebes 118 angetrieben, das dabei den Verstellschieber 39 von seiner Zwischenposition heraus verstellt. Hierbei wird vorerst über die Verzahnung 40 das Zahnrad 41 noch kurzzeitig angetrieben, wonach die Verzahnung 40 ausser Eingriff vom Zahnrad 41 kommt. Hierdurch ist die Antriebsverbindung zwischen dem Differentialgetriebe 118 und der Kassettenhalteeinrichtung 10 unterbrochen, wobei sich der hierbei vom Verstellstift 44 abgehobene Verstellhebel 43 mit seinem freien Ende an einem gerätefesten Anschlag 134 abstützt. Bei der weiteren Verstellung des Verstellschiebers 39 wird über seinen Verstellfortsatz 102 und die Blattfeder 100 der Verstellhebel 97 in Richtung des Pfeiles 103 verschwenkt, was eine Verstellung der Wickeltellerantriebseinrichtung 58 von ihrer ersten in ihre zweite Betriebsposition zur Folge hat. Zugleich wird hierbei vom Verstellschieber 39 die Andruckrolle 67 zur Bandantriebswelle 68 hin verstellt. Die Verstellung des Verstellschiebers 39 erfolgt solange, bis der Verstellschieber 39 seine Verstellposition erreicht hat. In dieser Verstellposition stösst der Verstellschieber 39, wie in Fig. 5 schematisch dargestellt ist, gegen den Schalter 133, der dadurch geöffnet wird. Dadurch wird der zuvor geschlossene Stromkreis für den Motor 117 unterbrochen und der Motor 117 bleibt stehen. Die Wickeltellerantriebseinrichtung 58 wird nun entgegen der Kraft der Blattfeder 100 über den Verstellschieber 39, das erste Ausgangszahnrad 127, das Zahnrad 126, die von dem durch die Selbsthemmung des Schneckenantriebes blockierten Planetenradträger 123 getragenen Planetenräder 124, das Zahnrad 125, das zweite Ausgangszahnrad 128, den Ring 72 und dessen Anschlag 74 vom Gegenanschlag 76 in ihrer zweiten Betriebsposition verstellt gehalten. Die Bandfädeleinrichtung 69 wird dabei durch die Blattfeder 100 über den Verstellschieber 39 und die vorstehend beschriebene Kraftflusskette in ihrer Einfädelposition verstellt gehalten, in der sich der Anschlag 74 am Gegenanschlag 76 abstützt. Die Kassettenhalteeinrichtung 10 wird dabei durch die Schraubendrehfeder 28 in ihrer Betriebsposition verstellt gehalten. Nach Abschluss des vorstehend beschriebenen Funktionsablaufes befindet sich die Kassette 2 in ihrer Betriebslage und das Magnetband 54 ist um die Abtasteinrichtung 70 und die Magnetköpfe 78, 80 und 81 herumgeschlungen und mit der Andruckrolle 67 an die Bandantriebswelle 68 angedrückt und die Wickeltellerantriebseinrichtung 58 nimmt ihre zweite Betriebsposition für den "Normalen Vorlauf" beziehungsweise den "Reverse-Lauf" ein, so dass nunmehr der gewünschte Wiedergabevorgang erfolgen kann.

Um eine Kassette 2 nach Abschluss des vorerwähnten Wiedergabevorganges wieder aus dem Gerät 1 entnehem zu können, wird eine sogenannte "Eject"-Taste des Tastensatzes 6 vom Benützer des Gerätes betätigt. Durch diese Tastenbetätigung wird der Umschalter 131 in die in Fig. 5 mit punktierten Linien angegebene Umschaltlage gebracht, wodurch der Motorstromkreis für den Motor 117 über den zuvor geschlossenen Schalter 132 und den Umschalter 131 geschlossen wird. Dabei ist der Schalter 133 vom Verstellschieber 39 in seiner geöffneten Lage gehalten. In diesem Fall wird der Motor 117 in der entgegengesetzten Drehrichtung angetrieben, wobei die Schnecke 120 das Schneckenrad 123 gemäss Fig. 5 nunmehr im Uhrzeigersinn antreibt. Das Schneckenrad 123 trachtet nun danach, über die Planetenräder 124 das erste Ausgangszahnrad 127 des Differentialgetriebes 118 entgegen dem Uhrzeigensinn und das zweite Ausgangszahnrad 128 im Uhrzeigersinn anzutreiben. Zu diesem Zeitpunkt wirkt die Blattfeder 100 über den Verstellschieber 39 auf das erste Ausgangszahnrad 127 des Differentialgetriebes 118 ein und belastet das erste Ausgangszahnrad 127 auch entgegen dem Uhrzeigersinn. Die Blattfeder 100 unterstützt somit die Rotation des ersten Ausgangszahnrades 127, so dass die durch die Wickeltellerantriebseinrichtung 58 bewirkte Belastung für das erste Ausgangszahnrad 127 kleiner ist als die durch die Bandfädeleinrichtung 69 auf das zweite Ausgangszahnrad 128 ausgeübte Belastung. Folgedessen wird über das erste Ausgangszahnrad 127 der Verstellschieber 39 aus seiner Verstellposition in Richtung zu seiner Zwischenposition verstellt, welche Verstellung durch die auf den Verstellfortsatz 102 einwirkende Blattfeder 100 unterstützt wird. Sobald der Verstellschieber 39 seine Verstellposition verlassen hat, wird der Schalter 133 geschlossen, was vorerst keine Auswirkung hat. Durch die Kraft der sich am Anschlag 101 abstützenden, zwischenden beiden Stiften 98 und 99 am Verstellhebel 97 eingespannten Blattfeder 100 wird über den Verstellhebel die Wickeltellerantriebseinrichtung 58 von ihrer zweiten Betriebsposition in ihre erste Betriebsposition und die Andruckrolle 67 in ihre Zwischenlage zurückverstellt. Kurz bevor der Verstellschieber 39 seine Zwischenposition erreicht, kommt die Verzahnung 40 desselben wieder in Eingriff mit dem Zahnrad 41 der Verstelleinrichtung 37 für die Kassettenhalteeinrichtung 10. Sobald sich der Verstellhebel 97 an dem gerätefesten Anschlag 101 abstützt, ist die Kraftwirkung der Blattfeder 100 auf den Verstellfortsatz 102 des Verstellschiebers 39 aufgehoben und es entfällt die Belastung des ersten Ausgangszahnrades 127 des Differentialgetriebes 118 durch die Wickeltellerantriebseinrichtung 58. Damit hat der Verstellschieber 39 seine Zwischenposition erreicht. Zu diesem Zeitpunkt wirkt die in ihrer Einfädelposition befindliche Bandfädeleinrichtung 69 auf das zweite Ausgangszahnrad 128 und die Kassettenhalteeinrichtung 10 auf das erste Ausgangszahnrad 127 des Differentialgetriebes ein. Da die Kassettenhalteeinrichtung 10 unter der Wirkung der Schraubendrehfeder 28 in ihrer Betriebsposition gehalten wird und die Schraubendrehfeder 28 dabei das erste Ausgangszahnrad 127 des Differentialgetriebes im Uhrzeigersinn belastet, ist die am ersten Ausgangszahnrad 127 wirksame Belastung grösser als die am zweiten Ausgangszahnrad 128 wirksame Belastung durch die Bandfädeleinrichtung 69. Folgedessen wird nunmehr der Verstellschieber 39 über das erste Ausgangszahnrad 127 in seiner Zwischenposition angehalten und über das zweite Ausgangszahnrad 128 die Bandfädeleinrichtung 69 aus ihrer Einfädelposition und die Andruckrolle 67 aus ihrer Zwischenlage zurückverstellt. Dieser Verstellvorgang erfolgt solange, bis sich der am Ring 72 angebrachte Anschlag 74 am gerätefesten Gegenanschlag 75 abstützt, wodurch dann der Ring 72 und folglich auch das zweite Ausgangszahnrad 128 des Differentialgetriebes 118 blockiert sind. Aufgrund dieser Blockierung wird nachfolgend wiederum das erste Ausgangszahnrad 127 angetrieben, das den Verstellschieber 39 von seiner Zwischenposition in seine Ruheposition zurückbewegt, wobei über die Verzahnung 40 und das damit zuvor wieder in Eingriff gebrachte Zahnrad 41 der Verstellhebel 43 verschwenkt wird und dieser über den Verstellstift 44 die Kassettenhalteeinrichtung 10 wiederum in ihre Ladeposition zurückverstellt. Sobald die Kassettenhalteeinrichtung 10 ihre Ladeposition erreicht, betätigt sie, wie dies in Fig. 5 schematisch dargestellt ist, den Schalter 132, wodurch dieser geöffnet wird und damit der Motorstromkreis für den Motor 117 unterbrochen wird, so dass der Motor 117 stehen bleibt. Die Kassettenhalteeinrichtung 10 wird nun entgegen der Kraft der Schraubendrehfeder 28 über die Verstelleinrichtung 37, den Verstellschieber 39, das erste Ausgangszahnrad 127, das Zahnrad 126, die von dem durch die Selbsthemmung des Schneckenantriebes blockierten Planetenradträger 123 getragenen Planetenräder 124, das Zahnrad 125, das zweite Ausgangszahnrad 128, den Ring 72 und dessen Anschlag 74 von dem Gegenanschlag 75 in ihrer Ladeposition verstellt gehalten. Die Bandfädeleinrichtung 69 wird dabei durch die Schraubendrehfeder 28 über die Verstelleinrichtung 37, den Verstellschieber 39 und die vorerwähnte Kraftflusskette in ihrer Ausfädelposition verstellt gehalten, in der sich der Anschlag 74 am Gegenanschlag 75 abstützt. Die Wickeltellerantriebseinrichtung 58 wird dabei durch die Blattfeder 100 in ihrer ersten Betriebsposition verstellt gehalten. Nunmehr kann die Kassette 2 händisch aus dem Gerät entnommen werden.

Selbstverständlich kann die Steuerschaltung 130 noch weitere Fühlschalter aufweisen, um den vorstehend erwähnten Bewegungsablauf zu vorgegebenen Zeitpunkten unterbrechen zu können. Beispielsweise kann ein wahlweise aktivierbarer, mit der Kassettenhalteeinrichtung 10 in deren Betriebsposition zusammenwirkender Fühlschalter vorgesehen sein, der bereits nach der Verstellung der Kassettenhalteeinrichtung von ihrer Ladeposition in ihre Betriebsposition den Motorstromkreis für den Motor 117 unterbricht, wobei dann eine Kassette 2 in ihre Betriebslage abgesenkt wird, jedoch die Bandfädeleinrichtung 69 das Magnetband 54 nicht aus der Kassette 2 herausführt und die Wickeltellerantriebseinrichtung 58 in ihrer ersten Betriebsposition für die Betriebsarten "Schneller Vorlauf" und "Schneller Rücklauf" verbleibt. In dieser Betriebssituation kann dann das in der Kassette 2 belassene Magnetband 54 in den Betriebsarten "Schneller Vorlauf" oder "Schneller Rücklauf" mit hoher Bandgeschwindigkeit umgespult werden.

Wie aus vorstehender Beschreibung ersichtlich ist, weist das vorliegende Gerät einen hohen Bedienungskomfort auf, wobei zur Erzielung dieses Komforts mit einem minimalen Aufwand das Auslangen gefunden wird, weil das motorisch antreibbare Differentialgetriebe nicht nur zur Verstellung der Bandfädeleinrichtung und der Wickeltellerantriebseinrichtung, wie dies an sich bekannt ist, sondern zusätzlich auch noch zur Verstellung der Kassettenaufnahmeeinrichtung ausgenützt wird. Dabei wird der zur Verstellung der Wickeltellerantriebseinrichtung vorgesehene Verstellschieber zugleich auch zur Verstellung der Kassettenhalteeinrichtung herangezogen. Wie aus vorstehender Beschreibung ferner hervorgeht, erfolgt die Umsteuerung zwischen den beiden Ausgängen des Differentialgetriebes bei vorliegendem Gerät in besonders einfacher Weise dadurch, dass die Federkräfte von Federn, die in den vom Verstellschieber zu verstellenden Geräteeinrichtungen ohnehin enthalten sind, ausgenützt werden.

Das in Fig. 8 dargestellte Aufzeichnungs- und Wiedergabegerät 1 weist eine senkrecht zu ihrer Deckenwand 13 mit zwei Schwalbenschwanz-Führungsleisten 135 und 136 zwischen ihrer Ladeposition und ihrer Betriebsposition verstellbar geführte Kassettenhalteeinrichtung 10 auf, wobei die Führungsleisten 135 und 136 senkrecht von einer Chassisplatte 137 nach oben hin abstehen. Die der Führungsleiste 135 benachbarte Seitenwand 11 der Kassettenhalteeinrichtung 10 weist zwei leistenförmige, senkrecht zur Deckenwand 13 verlaufende, durch je einen Durchbruch 138 beziehungsweise 139 in der Chassisplatte 137 nach unten durch dieselbe hindurchragende Wandfortsätze 140 und 141 auf. Der Wandfortsatz 140 ist mit einer Verzahnung 142 versehen, die mit einem walzenförmigen Zahnrad 143 in Eingriff steht. Das Zahnrad 143 ist von einer Verzahnung 144 antreibbar, die auf einem unterhalb der Chassisplatte 137 auf nicht näher dargestellte Weise längsverschieblich geführten Schieber 145 vorgesehen ist. Der Schieber 145 ist zwischen einer in Fig. 8 mit strichpunktierten Linien dargestellten Ruheposition und einer in Fig. 8 mit vollen Linien dargestellten Arbeitsposition verstellbar. Der Schieber 145 weist einen als Steuerkulisse vorgesehenen Schlitz 146 auf, den ein als Kulissenstein vorgesehener Stift 147 durchsetzt. Der Stift 147 ist auf einem Arm eines zweiarmigen Verriegelungshebels 148 angebracht, der um eine in der Chassisplatte 137 gelagerte Welle 149 schwenkbar ist. Der Verriegelungshebel 148 weist am Ende seines unterhalb der Kassettenhalteeinrichtung 10 liegenden Armes einen von ihm abstehenden Verriegelungslappen 150 auf, der bei in ihrer Betriebsposition befindlicher Kassettenhalteeinrichtung 10 in einen Durchbruch 151 in dem von der Seitenwand 11 der Kassettenhalteeinrichtung abstehenden Wandfortsatz 141 eintritt, wodurch die Kassettenhalteeinrichtung 10 in ihrer Betriebsposition verriegelt ist.

Die Bandfädeleinrichtung 69 weist im wesentlichen denselben Aufbau auf, wie jene des Gerätes gemäss den Figuren 1 bis 7. Der Antrieb des Ringes 72 erfolgt bei vorliegendem Gerät mit einem unterhalb der Chassisplatte 137 vorgesehenen, zum Ring 72 koaxialen Zahnrad 152, das von einer am Schieber 145 vorgesehenen Verzahnung 153 antreibbar ist. Das Zahnrad 152 ist mit einem in radialer Richtung von demselben abstehenden Arm 154 verbunden, der an seinem freien Ende nach oben abgebogen ist. Das abgebogene Ende ist durch einen zum Ring 72 koaxial angebrachten Schlitz 155 in der Chassisplatte 137 nach oben hindurchgeführt und L-förmig ausgebildet. Das L-förmig ausgebildete Ende des Armes 154 ist am Ring 72 festgeschraubt. Zum Festhalten der Bandfädeleinrichtung 69 in ihrer Ausfädelposition ist an der Oberseite des Ringes 72 ein Rastfortsatz 156 angebracht, dessen abgerundetes freies Ende bei in ihrer Ausfädelposition befindlicher Bandfädeleinrichtung von einem um eine Welle 157 schwenkbaren, federbelasteten Rasthebel 158 mit seiner Rastvertiefung festgehalten ist, wie dies in Fig. 8 mit strichpunktierten Linien dargestellt ist. Bei aus ihrer Ausfädelposition verstellter Bandführungseinrichtung stützt sich der Rasthebel 158 an einem Anschlag 159 ab, was in Fig. 8 der Übersichtlichkeit halber nicht dargestellt ist.

Das Gerät gemäss Fig. 8 weist einen zweiten Schieber 160 auf, der U-förmig ausgebildet ist und in derselben Richtung wie der Schieber 145 verstellbar geführt ist und an dessen Steg eine Rückstellfeder 161 angreift, die den U-förmigen Schieber 160 mit seinem Steg gegen einen von der Chassisplatte 137 abstehenden Anschlag 162 zieht. Der U-förmige Schieber 160 ist zwischen einer in Fig. 8 mit vollen Linien dargestellten Ruheposition, in der sich der Schieber 160 mit seinem Steg am Anschlag 162 unter der Wirkung der Feder 161 abstützt, und einer in Fig. 8 mit punktierten Linien dargestellten Arbeitsposition verstellbar. An einem Arm des U-förmigen Schiebers 160 ist ein in Richtung des Armes längsverschieblich geführter Betätigungsschiebers 163 angebracht, der mit einer Feder 164 gegenüber dem U-förmigen Schieber verspannt ist und der zum Abstützen an einem am U-förmigen Schieber vorgesehenen Anschlag 165 einen von demselben seitlich abstehenden Lappen 166 aufweist. Der Betätigungsschieber 163 trägt einen von demselben abstehenden Betätigungsstift 167, in dessen Verstellweg ein Arm eines um eine in der Chassisplatte gelagerte Welle 168 schwenkbaren zweiarmigen Zwischenhebels 169 ragt, der am Ende seines zweiten Armes einen Stift 170 trägt. Der Stift 170 ist durch einen Schlitz 171 in der Chassisplatte 137 nach oben hindurchgeführt und dient zum Zusammenwirken mit einem die Andruckrolle 67 tragenden, um eine Welle 172 schwenkbaren Andruckrollenhebel 173. Der Andruckrollenhebel 173 ist mit seiner Welle 172 auf einem nicht dargestellten Träger angebracht, der zwischen zwei Lagen verstellbar ist, wobei diese Verstellung mit der Verstellung der Bandfädeleinrichtung zwischen ihrer Ausfädelposition und ihrer Einfädelposition gekoppelt ist. In einer der beiden Lagen des Trägers nimmt die Andruckrolle 67 die in Fig. 8 mit strichpunktierten Linien dargestellte Lage ein, in der sie das in der Kassette untergebrachte Magnetband hintergreift, und in der anderen dieser beiden Lagen des Trägers nimmt die Andruckrolle 67 die in Fig. 8 mit vollen Linien dargestellte Lage ein, in der sie neben der Bandantriebswelle 68 liegt. Zwischen dem Träger und dem Andruckrollenhebel ist eine Feder wirksam, die danach trachtet, den Andruckrollenhebel gegen einen Anschlag am Träger angelegt zu halten, wobei dann die Andruckrolle von der Bandantriebswelle abgehoben ist. Die Andruckrolle 67 und der Andruckrollen 173, auf dem die Andruckrolle drehbar gelagert ist, bilden eine Andruckrolleneinrichtung 174, die eine zwischen zwei Betriebspositionen verstellbare Bandlaufbetriebseinrichtung darstellt. In der in Fig. 8 mit vollen Linien dargestellten Betriebsposition der Andruckrolleneinrichtung 174 ist die Andruckrolle 67 von der Bandantriebswelle 68 abgehoben, wobei dann beispielsweise ein Umspulvorgang des Magnetbandes durchführbar ist. Durch Verstellen des U-förmigen Schiebers 160 in seine Arbeitsposition ist die Andruckrolleneinrichtung 174 in ihre in Fig. 8 mit punktierten Linien dargestellte zweite Betriebsposition verstellbar, in der die Andruckrolle 67 an die Bandantriebswelle 68 angedrückt gehalten ist, wobei dann das Magnetband beispielsweise im "Normalen Vorlauf" oder im "Reverse-Lauf" antreibbar ist. Sowohl beim Umspulen des Magnetbandes im "Schnellen Vorlauf" oder "Schnellen Rücklauf" als auch beim Antreiben des Magnetbandes im "Normalen Vorlauf" oder im "Reverse-Lauf" erfolgt der Antrieb der Wickelteller 61 bzw. 62 mit der Wickeltellerantriebseinrichtung 58, die analog wie beim Gerät gemäss den Figuren 1 bis 7 ausgebildet und zwischen zwei Betriebspositionen verstellbar ist und deren Verstellung zwischen diesen beiden Betriebspositionen zusätzlich mit dem U-förmigen Schieber 160 erfolgt, wofür dieser einen durch einen Schlitz 175 in der Chassisplatte 137 nach oben hindurchragenden Verstellfortsatz 176 aufweist, der dieselbe Funktion hat wie der Verstellfortsatz 102 des Verstellschiebers 139 des Gerätes gemäss den Figuren 1 bis 7.

Zum Verstellen der Kassettenhalteeinrichtung 10 zwischen ihrer Ladeposition und ihrer Betriebsposition und der Bandfädeleinrichtung 69 zwischen ihrer Ausfädelposition und ihrer Einfädelposition sowie der Andruckrolleneinrichtung 174 und der Wickeltellerantriebseinrichtung 58 zwischen deren beiden Betriebspositionen weist das in Fig. 8 dargestellte Gerät dasselbe Differentialgetriebe 118 auf, wie dies im Gerät gemäss den Figuren 1 bis 7 vorgesehen ist, wobei auch der Antrieb des Differentialgetriebes in derselben Weise wie beim Gerät gemäss den Figuren 1 bis 7 erfolgt. In Fig. 8 sind nur der Motor 117, dessen Welle 119 und vom Differentialgetriebe 118 lediglich die beiden Ausgangszahnräder 127 und 128 dargestellt. Das erste Ausgangszahnrad 127 steht mit einer am zweiten Arm des U-förmigen Schiebers 160 vorgesehene Verzahnung 177 und das zweite Ausgangszahnrad 128 steht mit einer Verzahnung 178 am Schieber 145 ständig in Eingriff. Die Steuerschaltung 130 für den Motor 117 weist den gleichen Aufbau auf, wie jene des Gerätes gemäss den Figuren 1 bis 7. Der Schalter 132 ist bei vorliegendem Gerät vom Schieber 145 betätigbar, und zwar wird der Schalter 132 vom Schieber 145 in dessen Ruheposition geöffnet gehalten. Der Schalter 133 ist vom U-förmigen Schieber 160 betätigbar, und zwar wird der Schalter 133 vom U-förmigen Schieber 160 in dessen Arbeitsposition geöffnet gehalten.

Bei nichtbenütztem Gerät befindet sich der Schieber 145 in seiner in Fig. 8 mit strichpunktierten Linien dargestellten Ruhelage und der U-förmige Schieber 160 in seiner in Fig. 8 mit vollen Linien dargestellten Ruhelage. Wenn nach dem händischen Einsetzen einer Kassette 2 in die Kassettenhalteeinrichtung 10 beispielsweise durch eine Tastenbetätigung der Umschalter 131 in die in Fig. 8 mit vollen Linien dargestellte Lage gebracht wird, wird der Stromkreis für den Motor 117 über den Schalter 133 und den Umschalter 131 geschlossen und der Motor 117 so angetrieben, dass über das Differentialgetriebe 118 analog wie beim Gerät gemäss den Figuren 1 bis 7 auf das erste Ausgangszahnrad 127 eine Antriebskraft im Uhrzeigersinn und auf das zweite Ausgangszahnrad 128 eine Antriebskraft entgegen dem Uhrzeigersinn ausgeübt wird. Aufgrund der Tatsache, dass der U-förmige Schieber 160 unter der Wirkung der Rückstellfeder 161 steht, die der auf das erste Ausgangszahnrad 127 ausgeübten Antriebskraft entgegenwirkt, und am zweiten Ausgangszahnrad 128 zu diesem Zeitpunkt keine solche der Antriebskraft entgegenwirkende Belastung auftritt, ist das erste Ausgangszahnrad 127 stärker belastet als das zweite Ausgangszahnrad 128 des Differentialgetriebes. Folgedessen wird das zweite Ausgangszahnrad 128 entgegen dem Uhrzeigensinn in Drehung versetzt, wobei das zweite Ausgangszahnrad über die Verzahnung 178 den Schieber 145 aus seiner Ruheposition verstellt. Sobald der Schieber 145 seine Ruheposition verlassen hat, wird der Schalter 132 geschlossen. Beim Verstellen des Schiebers 145 treibt dessen Verzahnung 144, die hierbei mit dem walzenförmigen Zahnrad 143 in Eingriff steht, über das Zahnrad 143 die Kassettenhalteeinrichtung 10 an, wobei dieselbe aus ihrer Ladeposition verstellt wird. Die Länge der Verzahnung 144 ist so gewählt, dass dieselbe zum gleichen Zeitpunkt, zu dem die Kassettenhalteeinrichtung 10 ihre Betriebsposition erreicht, ausser Eingriff vom Zahnrad 143 kommt. Um die Kassettenhalteeinrichtung 10 unmittelbar danach in ihrer Betriebsposition zu verriegeln, wird bei der weiteren Verstellung des Schiebers 145 über dessen Schlitz 146 und den Stift 147 am Verriegelungshebel 148 letzterer gemäss Fig. 8 im Uhrzeigersinn verschwenkt. Dabei tritt der Verriegelungslappen 150 in dem Durchbruch 151 in dem von der Seitenwand 11 abstehenden Wandfortsatz 141 ein und verriegelt die Kassettenhalteeinrichtung 10 in ihrer Betriebsposition. Der Verriegelungslappen 150 kann auch federnd ausgebildet sein und eine Verstellschräge aufweisen, die beim Eintreten in den Durchbruch 151 den Wandfortsatz 141 und damit die gesamte Kassettenhalteeinrichtung 10 in Richtung zur Betriebsposition belastet, so dass die Kassettenhalteeinrichtung sicher in ihrer Betriebsposition gehalten ist. Beim weiteren Verstellen des Schiebers 145 kommt dessen Verzahnung 153 mit dem Zahnrad 152 in Eingriff. Über die Verzahnung 153 treibt der Schieber 145 das Zahnrad 152 und dieses über den Arm 154 den Ring 72 gemäss Fig. 8 im Uhrzeigersinn an, wodurch die Bandfädeleinrichtung 69 aus ihrer in Fig. 8 mit strichpunktierten Linien dargestellten Ausfädelposition unter Lösung der Rastverbindung zwischen dem Rastfortsatz 156 und dem Rasthebel 158 verstellt wird. Beim Lösen der Rastverbindung tritt eine Belastung des zweiten Ausgangszahnrades auf, die aufgrund der gewählten Dimensionierung der Rastverbindung und der Rückstellfeder 161 kleiner ist als die von der Rückstellfeder 161 über den U-förmigen Schieber 160 auf das erste Ausgangszahnrad 127 ausgeübte Belastung, so dass auch in dieser Situation das zweite Ausgangszahnrad 128 des Differentialsgetriebes weiter angetrieben wird. Bei Erreichen der in Fig. 8 mit vollen Linien dargestellten Einfädelposition stösst der Anschlag 74 des Ringes 72 gegen den Gegenanschlag 76, wodurch der Ring 72 und folglich über den Arm 154, das Zahnrad 152 und den Schieber 145 auch das zweite Ausgangszahnrad 128 gegen eine weitere Verstellung blockiert sind. Dadurch ist die Belastung für das zweite Ausgangszahnrad 128 grösser als die durch die Rückstellfeder 161 bewirkte Belastung für das erste Ausgangszahnrad 127, so dass das Differentialgetriebe 118 nunmehr das erste Ausgangszahnrad 127 im Uhrzeigersinn antreibt, wobei der U-förmige Schieber 160 entgegen der Kraft der Rückstellfeder 162 aus seiner Ruheposition verstellt wird. Im Zuge dieser Verstellung stösst der am U-förmigen Schieber verschiebbare Betätigungsschieber 163 mit seinem Betätigungsstift 167 gegen den Zwischenhebel 169 und dieser stösst mit seinem Stift 170 gegen den Andruckrollenhebel 173. Beim weiteren Verstellen des U-förmigen Schiebers 160 wird die Andruckrolleneinrichtung 174 verstellt, bis die Andruckrolle 67 gegen die Bandantriebsweile 68 stösst. Danach sind der Andruckrollenhebel 173 und der Zwischenhebel 169 und der Betätigungsschieber 163 gegen eine weitere Verstellung blockiert, so dass bei weiterer Verstellung des U-förmigen Schiebers 160 die Feder 164 zwischen dem Betätigungsschieber 163 und dem U-förmigen Schieber 160 gespannt wird und auf diese Weise im wesentlichen die Anpresskraft liefert, mit der die Andruckrolle 67 an die Bandantriebswelle 68 angedrückt wird. Bei der Verstellung der Andruckrolleneinrichtung 174 erfolgt auch die Verstellung der Wickeltellerantriebseinrichtung 58 in ihre den Betriebsarten "Normaler Vorlauf" und "Reverse-Lauf" entsprechende Betriebsposition. Danach stösst der U-förmige Schieber 160 bei Erreichen seiner Arbeitsposition mit seinem einen Arm gegen den Schalter 133, wodurch der Stromkreis für den Motor 117 unterbrochen wird und der Motor stehen bleibt. Nunmehr sind die Andruckrolleneinrichtung 174 und die Wickeltellerantriebseinrichtung 58 entgegen der Kraftwirkung der in der Andruckrolleneinrichtung und der Wickeltellerantriebseinrichtung integrierten Rückstellfedern und der Federn 164 und 161 über den U-förmigen Schieber 160, das erste Ausgangszahnrad 127, das Zahnrad 126, die von dem durch die Selbsthemmung des Schneckenantriebes blockierten Planetenradträger 123 ortsfest gehaltenen Planetenräder 124, das Zahnrad 125, das zweite Ausgangszahnrad 128, den Schieber 145, das Zahnrad 152, den Arm 154, den Ring 72 und dessen Anschlag 74 vom gerätefesten Gegenanschlag 76 in ihren zuvor eingenommenen Betriebspositionen festgehalten. Durch die Kraftwirkung der in der Andruckrolleneinrichtung und der Wickeltellerantriebseinrichtung integrierten Rückstellfedern und der Federn 164 und 161 ist über die vorstehend beschriebene Kraftflusskette die Bandfädeleinrichtung 69 sicher in ihrer Einfädelposition festgehalten, in der sich der Anschlag 74 am Gegenanschlag 76 abstützt. Die Kassettenhalteeinrichtung 10 ist hierbei von dem Verriegelungslappen 150 des Verriegelungshebels 148 in ihrer Betriebsposition verriegelt. Nunmehr kann analog wie beim Gerät gemäss den Figuren 1 bis 7 beispielsweise ein Aufnahmevorgang vorgenommen werden.

Um eine Kassette wieder aus dem Gerät entnehmen zu können, wird der Umschalter 131 beispielsweise durch Tastenbetätigung in seine in Fig. 8 mit punktierten Linien dargestellte Umschaltlage gebracht, wobei dann der Stromkreis für den Motor 117 über den zuvor geschlossenen Schalter 132 und den Umschalter 131 geschlossen wird und der Motor 117 so angetrieben wird, dass über das Differentialgetriebe 118 auf das erste Ausgangszahnrad 127 eine Antriebskraft entgegen dem Urzeigersinn und auf das zweite Ausgangszahnrad 128 eine Antriebskraft im Uhrzeigersinn ausgeübt wird. Da die Antriebskraft auf das erste Ausgangszahnrad 127 von der Rückstellfeder 161 über den U-förmigen Schieber 160 unterstützt wird, wird vom Differentialgetriebe 118 über das erste Ausgangzahnrad 127 der U-förmige Schieber 160 aus seiner Arbeitsposition verstellt. Sobald der U-förmige Schieber 160 seine Arbeitsposition verlassen hat, wird der Schalter 133 geschlossen. Beim Verstellen des U-förmigen Schiebers 160 stösst ein von demselben abstehender Stift 178 gegen den Zwischenhebel 169 und nimmt diesen mit und hebt die zwischen dem Andruckrollenhebel 173 und dessen nicht dargestelltem Träger wirksame Feder die Andruckrolle 67 von der Bandantriebswelle 68 ab, so dass die Andruckrolle in ihre in Fig. 8 mit vollen Linien dargestellte Position verstellt wird. Damit nimmt die Andruckrolleneinrichtung 174 wieder ihre ursprüngliche Betriebsposition ein. Auch wird der Betätigungsschieber 163 durch die Feder 164 mit seinem Lappen 166 wieder an den Anschlag 165 am U-förmigen Schiebar 160 angelegt. Ferner gibt der Verstellfortsatz 176 die Wickeltellerantriebseinrichtung 58 zur Verstellung in ihre den Betriebsarten "Schneller Vorlauf" und "Schneller Rücklauf" entsprechende erste Betriebsposition frei. Bei Erreichen der Ruheposition des U-förmigen Schiebers 160 stösst derselbe gegen den Anschlag 162, wonach der U-förmige Schieber 160 und folglich das erste Ausgangszahnrad 127 blockiert sind. Folgedessen treibt das Differentialgetriebe 118 nunmehr das zweite Ausgangszahnrad 128 gemäss Fig. 8 im Uhrzeigersinn an, wobei über den Schieber 145 und dessen mit dem Zahnrad 152 in Eingriff stehende Verzahnung 153 zuerst die Bandfädeleinrichtung 69 aus ihrer Einfädelposition verstellt wird. Zu dem Zeitpunkt, zu dem die Bandfädeleinrichtung 69 ihre Ausfädelposition erreicht, kommt aufgrund der Wahl der Länge der Verzahnung 153 dieselbe ausser Eingriff vom Zahnrad 152 und der Rastfortsatz 156 tritt in die Rastvertiefung des Rasthebels 158 ein. Bei der weiteren Verstellung des Schiebers 145 wird der Verriegelungshebel 148 über seinen Stift 147 vom Schlitz 146 gemäss Fig. 8 entgegen dem Uhrzeigersinn verschwenkt, wobei der Verriegelungslappen 150 aus dem Durchbruch 151 in dem Wandfortsatz 141 heraustritt, so dass die Kassettenhalteeinrichtung 10 zum Verstellen freigegeben ist. Beim weiteren Verstellen des Schiebers 145 kommt dessen Verzahnung 144 mit dem walzenförmigen Zahnrad 143 in Eingriff, wobei dieses dann die Kassettenhalteeinrichtung 10 antreibt und für ihre Verstellung von ihrer Betriebsposition in ihre Ladeposition sorgt. Wenn die Kassettenhalteeinrichtung 10 ihre Ladeposition erreicht, wird der Schalter 132 geöffnet, was zum Stillstand des Motors 117 führt. Danach ist die Kassettenhalteeinrichtung 10 über das Zahnrad 143, den Schieber 145, das zweite Ausgangszahnrad 128, das Zahnrad 125, die von dem durch die Selbsthemmung des Schneckenantriebes blockierten Planetenradträger 123 ortsfest gehaltenen Planetenräder 124, das Zahnrad 126, das erste Ausgangszahnrad 127 und den U-förmigen Schieber 160 vom Anschlag 162 in seiner Ladeposition festgehalten. Die Bandfädeleinrichtung 69 ist durch den Rasthebel 158 in ihrer Ausfädelposition festgehalten. Die Andruckrolleneinrichtung und die Wickeltellerantriebseinrichtung sind durch die in dieselben integrierten Rückstellfedern in ihren ursprünglichen Betriebspositionen festgehalten. Nunmehr kann die Kassette händisch aus dem Gerät entnommen werden.

Wie aus vorstehender Beschreibung ersichtlich ist, weist auch das Gerät gemäss Fig. 8 bei einem einfachen und raumsparenden Aufbau einen hohen Bedienungskomfort auf, da ausser dem händischen Einschieben einer Kassette keine weiteren kraftaufwändigen Betätigungen durchzuführen sind. Bei vorliegendem Gerät sind die Kassettenhalteeinrichtung und die Bandfädeleinrichtung über einen Ausgang des Differentialgetriebes und die Bandlaufbetriebseinrichtungen, nämlich die Andruckrolleneinrichtung und die Wickeltellerantriebseinrichtung, über den anderen Ausgang des Differentialgetriebes verstellbar. Selbstverständlich kann bei vorliegendem Gerät auch ein vom Schieber 145 verstellbarer weiterer Verriegelungshebel vorgesehen werden, der in der Ruhelage des Schiebers 145 die Bandfädeleinrichtung gegen Verstellen verriegelt und der erst nach der Verstellung der Kassettenhalteeinrichtung in ihre Betriebsposition vom Schieber 145 verstellt wird und dann die Verstellung der Bandfädeleinrichtung freigibt. Weiters kann ein von der Bandfädeleinrichtung oder vom Schieber 145 gesteuerter Verriegelungsmechanismus für den U-förmigen Schieber oder eine der beiden Bandlaufbetriebseinrichtungen vorgesehen werden, wobei der Verriegelungsmechanismus die Verstellung der Bandlaufbetriebseinrichtungen nur dann freigibt, wenn die Bandfädeleinrichtung ihre Einfädelposition einnimmt.

Das in Fig. 9 stark schematisiert dargestellte Aufzeichnungs- und Wiedergabegerät 1 weist eine Kassettenhalteeinrichtung 10 auf, die senkrecht zu ihrer Deckenwand 13 zwischen ihrer in Fig. 9 mit vollen Linien dargestellten Ladeposition und ihrer in Fig. 9 mit punktierten Linien dargestellten Becriebsposition verstellbar ist, in der sich die Kassettenhalteeinrichtung 10 mit ihrer Seitenwand 12 an einem gerätefesten Anschlag 180 abstützt. Zum Verstellen der Kassettenhalteeinrichtung 10 von ihrer Ladeposition in ihre Betriebsposition greift an derselben eine Zugfeder 181 an. Zur entgegengesetzten Verstellung der Kassettenhalteeinrichtung 10 ist dieselbe von einem Verstellzahnrad 182 antreibbar, das mit einer an der Seitenwand 12 der Kassettenhalteeinrichtung 10 vorgesehenen Verzahnung 183 in Eingriff steht. Das Verstellzahnrad 182 ist einstückig mit einem Kegelzahnrad 184 verbunden.

Von der Bandfädeleinrichtung 69 des vorliegenden Gerätes ist nur der Ring 72 mit seinem Anschlag 74 dargestellt. Der Anschlag 74 stützt sich in der mit vollen Linien dargestellten Ausfädelposition der Bandfädeleinrichtung 69 an dem gerätefesten Gegenanschlag 75 und in der mit punktierten Linien dargestellten Einfädelposition an dem gerätefesten Gegenanschlag 76 ab. In vorliegendem Fall ist die Bandfädeleinrichtung 69 in Richtung des Pfeiles 185 von ihrer Ausfädelposition in ihre Einfädelposition verstellbar.

Von den Bandlaufbetriebseinrichtungen des Gerätes gemäss Fig. 9 ist nur die Andruckrolleneinrichtung 174 dargestellt. Sie besteht im wesentlichen aus der an die Bandantriebswelle 68 andrückbaren Andruckrolle 67, die auf dem um die Schwenkachse 172 schwenkbaren Andruckrollenhebel 173 drehbar gelagert ist. An dem Andruckrollenhebel 173 greift eine Feder 186 an, die den Andruckrollenhebel in einer in Fig. 9 der Übersichtlichkeit halber nicht dargestellten Ruheposition der Andruckrolleneinrichtung 174 gegen einen Anschlag 187 angelegt hält. Zum Verstellen der Andruckrolleneinrichtung 174 aus der vorerwähnten Ruheposition in die in Fig. 9 mit punktierten Linien dargestellte Betriebsposition ist ein in seiner Längsrichtung verschiebbare geführter Verstellschieber 188 vorgesehen, an dem eine Feder 189 angreift, die den Verstellschieber 188 gegen einen Anschlag 190 zieht. Der Verstellschieber 188 ist zwischen einer in Fig. 9 mit vollen Linien dargestellten Ruheposition, in der er sich am Anschlag 190 abstützt, und einer in Fig. 9 mit punktierten Linien dargestellten Arbeitsposition verschiebbar. Am Verstellschieber 188 ist eine von demselben seitlich abstehende Blattfeder 191 befestigt, die bei in seine Arbeitsposition verstelltem Verstellschieber 188 mit ihrem freien Ende die Andruckrolleneinrichtung 174 in ihre Betriebsposition verstellt hält.

Zum Verstellen der Kassettenhalteeinrichtung 10 zwischen ihrer Ladeposition und ihrer Betriebsposition und der Bandfädeleinrichtung 69 zwischen ihrer Ausfädelposition und ihrer Einfädelposition sowie der Andruckrolleneinrichtung 174 zwischen ihrer Ruheposition und ihrer Betriebsposition weist das Gerät gemäss Fig. 9 ein vom Motor 117 über dessen Motorwelle 119 und eine Schnecke 120 antreibbares Differentialgetriebe 118 mit drei Ausgängen auf, die durch ein als Kegelzahnrad ausgebildetes erstes Ausgangszahnrad 192, ein zweites Ausgangszahnrad 193 und ein drittes Ausgangszahnrad 194 gebildet sind. Vom Differentialgetriebe 118 sind in Fig. 9 nur diese drei Ausgangszahnräder 192, 193 und 194 dargestellt. Das erste Ausgangszahnrad 192 steht mit dem Kegelzahnrad 184, das zweite Ausgangszahnrad 193 mit der Verzahnung 73 des Ringes 72 und das dritte Ausgangszahnrad 194 mit einer Verzahnung 195 am Verstellschieber 188 ständig in Eingriff. Die Steuerschaltung 130 für den Motor 117 weist den gleichen Aufbau wie bei den Geräten gemäss den Figuren 1 bis 7 bzw. 8 auf. Der Schalter 132 der Steuerschaltung 130 wird von der Kassettenhalteeinrichtung 10 in deren Ladeposition in seiner geöffneten Lage gehalten. Der Schalter 133 der Steuerschaltung 130 wird vom Verstellschieber 188 in dessen Arbeitsposition in seiner geöffneten Lage gehalten.

Das Differentialgetriebe 118 des Gerätes gemäss Fig. 9 ist in Fig. 10 detailliert dargestellt. Ein Welle 196 ist in eine an einer Chassisplatte 197 angebrachte Buchse 198 eingesetzt und darin beispielsweise durch Kleben befestigt. Auf der Welle 196 ist ein Schneckenritzel 199 drehbar gelagert, das von der vom Motor 117 über die Motorwelle 119 angetriebenen Schnecke 120 antreibbar ist. Das Schneckenritzel 199 ist über eine erste abgestufte Hülse 200 mit einem Zahnrad 201 einstückig verbunden, das ein erstes Sonnenrad des Differentialgetriebes bildet. Mit dem ersten Sonnenrad 201 stehen zwei Planetenräder 202 in Eingriff, die je auf einer in das Kegelzahnrad 192 eingepressten Welle 203 drehbar gelagert sind. Das Kegelzahnrad 192, das auf der ersten abgestuften Hülse 200 drehbar gelagert ist, bildet somit einen ersten Planetenradträger und, wie bereits zuvor erwähnt, zugleich das erste Ausgangszahnrad des Differentialgetriebes. Die beiden Planetenräder 202 stehen ihrerseits auch noch mit einem ersten Hohlzahnrad 204 in Eingriff, das mit einer Hülse 205 versehen ist, die in eine zweite abgestufte Hülse 206 eines weiteren Zahnrades 207 eingepresst ist, das ein zweites Sonnenrad des Differentialgetriebes bildet. Mit dem zweiten Sonnenrad 207 stehen zwei weitere Planetenräder 208 in Eingriff, die je auf einer in das Zahnrad 193 eingepresste Welle 209 drehbar gelagert sind. Das Zahnrad 193, das auf der zweiten abgestuften Hülse 206 drehbar gelagert ist, bildet somit einen zweiten Planetenradträger und, wie bereits zuvor erwähnt, zugleich das zweite Ausgangszahnrad des Differentialgetriebes. Die beiden weiteren Planetenräder 208 stehen ihrerseits auch noch mit einem zweiten Hohlzahnrad 210 in Eingriff, das einstückig mit dem Zahnrad 194 verbunden ist, das wie bereits erwähnt das dritte Ausgangszahnrad des Differentialgetriebes bildet.

Im folgenden ist ein Ablauf von Funktionen im Gerät gemäss Fig. 9 beschrieben, der erforderlich ist, um mit einer in das Gerät eingesetzten Kassette beispielsweise einen Wiedergabevorgang durchführen zu können. Durch Betätigen einer Taste zum Einschalten der Betriebsart "Wiedergabe" wird der Umschalter 131 in die in Fig. 9 mit vollen Linien dargestellte Umschaltlage gebracht. Dadurch wird der Stromkreis für den Motor 117 über den geschlossenen Schalter 133 und den Umschalter 131 geschlossen, und der Motor 117 treibt dann über die Schnecke 120 das Schneckenritzel 199 entgegen dem Uhrzeigersinn an. Vom Schneckenritzel 199 ist über das Differentialgetriebe 118 eines der drei Ausgangszahnräder 192, 193 und 194 antreibbar, und zwar ist das erste Ausgangszahnrad 192 und das dritte Ausgangszahnrad 194 entgegen dem Uhrzeigersinn und das zweite Ausgangszahnrad 193 im Uhrzeigersinn antreibbar. Aufgrund der Tatsache, dass die an der Kassettenhalteeinrichtung 10 angreifende Zugfeder 181 die Antriebskraft auf das erste Ausgangszahnrad 192 unterstützt, wobei auf das zweite Ausgangszahnrad 193 keine solche unterstützende Belastung einwirkt und auf das dritte Ausgangszahnrad 194 eine der Antriebskraft auf dasselbe entgegenwirkende, durch die am Verstellschieber 188 angreifende Feder 189 bewirkte Belastung einwirkt, wird zuerst vom Schneckenritzel 199 über die erste abgestufte Hülse 200, das erste Sonnenrad 201, die beiden Planetenräder 202 und deren Wellen 203, das erste Ausgangszahnrad 192 des Differentialgetriebes entgegen dem Uhrzeigersinn angetrieben, wobei die übrigen Räder des Differentialgetriebes stillstehen. Vom ersten Ausgangszahnrad 192 wird über das Kegelzahnrad 184 und das damit verbundene Verstellzahnrad 182 die Verzahnung 183 der Kassettenhalteeinrichtung 10 angetrieben. Hierdurch wird die Verstellung der Kassettenhalteeinrichtung unter der Wirkung der Feder 181 freigegeben, wodurch die Kassettenhalteeinrichtung aus ihrer Ladeposition verstellt wird. Dabei wird der Schalter 132 geschlossen. Durch die Kraft der Feder 181 wird die Kassettenhalteeinrichtung in Richtung zu ihrer Betriebsposition bewegt, wobei das hierbei mit der Kassettenhalteeinrichtung zusammenwirkende Differentialgetriebe für eine gleichmässige Verstellung der Kassettenhalteeinrichtung sorgt. Wenn die Kassettenhalteeinrichtung 10 ihre Betriebsposition erreicht, stösst dieselbe gegen den Anschlag 180, wobei dann die Kassettenhalteeinrichtung und folglich auch das erste Ausgangszahnrad 192 des Differentialgetriebes blockiert sind. Aufgrund der Tatsache, dass zu diesem Zeitpunkt die durch die am Verstellschieber 188 angreifende Feder 189 für das dritte Ausgangszahnrad 194 gebildete Belastung grösser ist als die durch den Ring 72 der Bandfädeleinrichtung 69 für das zweite Ausgangszahnrad 193 gebildete Belastung, wird nunmehr über das Differentialgetriebe das zweite Ausgangszahnrad 193 desselben im Uhrzeigersinn angetrieben. Dieser Antrieb erfolgt vom Schneckenritzel 199 über die erste abgestufte Hulse 200, das erste Sonnenrad 201, die Planetenräder 202, das erste Hohlrad 204, dessen Hülse 205, die zweite abgestufte Hülse 206, das zweite Sonnenrad 207, die beiden weiteren Planetenräder 208 und deren Wellen 209, wobei die übrigen Räder des Differentialgetriebes stillstehen. Hierdurch wird der Ring 72 der Bandfädeleinrichtung 69 in Richtung des Pfeiles 185 angetrieben, wobei die Bandfädeleinrichtung aus ihrer Ausfädelposition verstellt wird. Wenn die Bandfädeleinrichtung ihre Einfädelposition erreicht, stösst der Anschlag 74 am Ring 72 gegen den gerätefesten Gegenanschlag 76, wodurch dann der Ring 72 und folglich auch das zweite Ausgangszahnrad 193 blockiert sind. Nunmehr schaltet das Differentialgetriebe 118 den Antrieb auf das dritte Ausgangszahnrad 194 um, dessen Antrieb vom Schneckenritzel 199 über die erste abgestufte Hülse 200, das erste Sonnenrad 201, die beiden Planetenräder 202, das erste Hohlrad 204, dessen Hülse 205, die zweite abgestufte Hülse 206, das zweite Sonnenrad 207, die weiteren Planetenräder 208 und das zweite Hohlzahnrad 210 entgegen dem Uhrzeigersinn erfolgt, wobei die übrigen Räder des Differentialgetriebes stillstehen. Hierdurch wird der Verstellschieber 188 entgegen der Kraft der Feder 189 aus seiner Ruheposition verstellt. Bei dieser Verstellung wird die Andruckrolleneinrichtung 174 in ihre Betriebsposition gebracht, in der die Blattfeder 191 über den Andruckrollenhebel 173 die Andruckrolle 67 an der Bandantriebswelle 68 angedrückt hält. Selbstverständlich können bei dieser Verstellung des Verstellschiebers 188 auch noch weitere Bandlaufbetriebseinrichtungen, wie eine Wickeltellerantriebseinrichtung, eine Wickeltellerbremseinrichtung und eine Bandspannungsregeleinrichtung, verstellt werden. Wenn der Verstellschieber 188 seine in Fig. 9 mit punktierten Linien dargestellte Arbeitsposition erreicht, wird der Schalter 133 geöffnet, so dass der Motor 117 stehen bleibt. Hierbei ist dann aufgrund der Selbsthemmung zwischen der Schnecke 120 und dem Schneckenritzel 199 über die erste abgestufte Hülse 200 das erste Sonnenrad 201 gegen Verdrehen blockiert. Die Andruckrolleneinrichtung 174 ist dann entgegen der Kraft der Federn 186, 191 und 189 über den Verstellschieber 188, das dritte Ausgangszahnrad 194, das zweite Hohlrad 210, die beiden weiteren Planetenräder 208, das zweite Sonnenrad 207, die zweite abgestufte Hülse 205, das erste Hohlrad 204, die beiden Planetenräder 202, deren Wellen 203, das erste Ausgangsazahnrad 192, das Kegelzahnrad 184, das Verstellzahnrad 182, die Verzahnung 183 und die Kassettenhalteeinrichtung 10 von dem Anschlag 180 in ihrer Betriebsposition festgehalten. Die Bandfädeleinrichtung 69 ist hierbei unter der Kraft der Feder 189 über den Verstellschieber 188, das dritte Ausgangszahnrad 194, das zweite Hohlrad 210, die beiden weiteren Planetenräder 208, deren Wellen 209, das zweite Ausgangszahnrad 193, den Ring 72 und dessen Anschlag 74 am Gegenanschlag 76 festgehalten und auf diese Weise sicher in ihrer Einfädelposition positioniert. Die Kassettenhalteeinrichtung 10 ist hierbei von der Zugfeder 181 in ihrer Betriebsposition festgehalten, in der sie sich am Anschlag 180 abstützt. Nach Abschluss des vorstehend beschriebenen Funktionsablaufes kann ein Wiedergabevorgang vorgenommen werden.

Um nach Beendigung eines solchen Wiedergabevorganges eine Kassette wieder aus dem Gerät entnehmen zu können, wird beispielsweise durch Tasterbetätigung der Umschalter 131 in seine in Fig. 9 mit punktierten Linien dargestellte Umschaltlage gebracht, in der der Stromkreis für den Motor 117 über den zuvor geschlossenen Schalter 132 und den Umschalter 131 geschlossen wird. Der Motor 117 treibt dann über die Schnecke 120 das Schneckenritzel 199 im Uhrzeigersinn an, wobei dann in Abhängigkeit von den an den Ausgängen des Differentialgetriebes auftretenden Belastungen entweder das erste Ausgangszahnrad 192 im Uhrzeigersinn oder das zweite Ausgangszahnrad 193 entgegen dem Uhrzeigersinn oder das dritte Ausgangszahnrad 194 im Uhrzeigersinn angetrieben wird. Aufgrund der Tatsache, dass zu diesem Zeitpunkt die auf den Verstellschieber 188 einwirkende Feder 189 eine die Antriebskraft auf das dritte Ausgangszahnrad 194 unterstützende Belastung bildet, wobei die Bandfädeleinrichtung 69 auf das zweite Ausgangszahnrad 193 keine solche unterstützende Belastung ausübt und die auf die Kassettenhalteeinrichtung 10 einwirkende Zugfeder 181 eine entgegen der Antriebskraft auf das erste Ausgangszahnrad 192 wirksame Belastung für dasselbe bildet, wird das dritte Ausgangszahnrad 194 vom Schneckenritzel 199 über die bereits zuvor beschriebene Kraftflusskette im Uhrzeigersinn angetrieben, wodurch der Verstellschieber 188 unter der Wirkung der Feder 189 aus seiner Arbeitsposition verstellt wird. Hierbei ist durch die Kopplung des Verstellschiebers 188 mit dem Differentialgetriebe für eine gleichmässige Verstellung desselben gesorgt. Bei dieser Verstellung des Verstellschiebers 188 wird die Andruckrolleneinrichtung 174 in ihre ursprüngliche Ruheposition zuruckverstellt. Wenn der Verstellschieber 188 seine Ruheposition erreicht, stösst derselbe gegen den Anschlag 190, wodurch der Verstellschieber und folglich auch das dritte Ausgangszahnrad 194 des Differentialgetriebes blockiert sind. Aufgrund der Tatsache, dass zu diesem Zeitpunkt die mit der Zugfeder 188 in ihrer Betriebsposition festgehaltene Kassettenhalteeinrichtung 10 für das erste Ausgangszahnrad 192 eine grössere Belastung darstellt als die Bandfädeleinrichtung 69 für das zweite Ausgangszahnrad 193 des Differentialgetriebes, wird nunmehr das zweite Ausgangszahnrad 193 vom Schneckenritzel 199 über die bereits zuvor beschriebene Kraftflusskette entgegen dem Uhrzeigersinn angetrieben, wodurch die Bandfädeleinrichtung 69 aus ihrer Einfädelposition entgegen der Richtung des Pfeiles 185 verstellt wird. Wenn die Bandfädeleinrichtung 69 ihre Ausfädelposition erreicht, stösst der Anschlag 74 des Ringes 72 gegen den gerätefesten Gegenanschlag 75, wodurch der Ring 72 und folglich das zweite Ausgangszahnrad 193 blockiert sind. Folgedessen wird nunmehr das erste Ausgangszahnrad 192 über die bereits zuvor beschriebene Kraftflusskette im Uhrzeigersinn angetrieben, wodurch die Kassettenhalteeinrichtung 10 entgegen der Kraft der Zugfeder 181 aus ihrer Betriebsposition verstellt wird. Wenn die Kassettenhalteeinrichtung ihre Ladeposition erreicht, wird der Schalter 132 geöffnet, wodurch der Stromkreis für den Motor 117 unterbrochen wird und der Motor 117 stehen bleibt Bei stillstehendem Motor 117 ist durch die Selbsthemmung zwischen der Schnecke 120 und dem Schneckenritzel 199 wiederum das erste Sonnenrad 201 gegen Verdrehen blockiert. Die Kassettenhalteeinrichtung ist hierbei über das Verstellzahnrad 182, das Kegelzahnrad 184, das erste Ausgangszahnrad 192, die Wellen 203, die beiden Planetenräder 202, das erste Hohlzahnrad 204, die Hülse 205, die zweite abgestufte Hülse 206, das zweite Sonnenrad 207, die beiden weiteren Planetenräder 208, das zweite Hohlzahnrad 210, das dritte Ausgangszahnrad 194 und den Verstellschieber 188 vom Anschlag 190 entgegen der Kraft der Zugfeder 181 in ihrer Ladeposition festgehalten. Die Bandfädeleinrichtung 69 ist hierbei durch die Kraft der Zugfeder 181 über die Kassettenhalteeinrichtung 10, das Verstellzahnrad 182, das Kegelzahnrad 184, das erste Ausgangszahnrad 192, die Wellen 203, die beiden Planetenräder 202, das erste Hohlzahnrad 204, die Hülse 205, die zweite abgestufte Hülse 206, das zweite Sonnenrad 207, die beiden weiteren Planetenräder 208, deren Wellen 209, das zweite Ausgangszahnrad 193, den Ring 72 und dessen Anschlag 74 am gerätefesten Gegenanschlag 75 festgehalten. Die Andruckrolleneinrichtung 174 ist durch die am Andruckrollenhebel 173 angreifende Feder 186 in ihrer Ruheposition und der Verstellschieber 188 durch die Feder 189 am Anschlag 190 festgehalten. Nunmehr kann eine in die Kassettenhalteeinrichtung zuvor eingesetzte Kassette wieder aus derselben entnommen werden.

Auch das Gerät gemäss Fig. 9 weist einen hohen Bedienungskomfort auf, der mit einem geringen Aufwand erreicht wird. Die Verwendung eines Differentialgetriebes mit drei Ausgängen bietet den Vorteil, dass die räumliche Lage der über die drei Ausgänge antreibbaren Geräteeinrichtungen im Gerät praktisch ohne Einschränkungen frei wählbar ist.

Selbstverständlich sind im Rahmen der Erfindung noch eine Reihe weiterer Möglichkeiten offen. So kann bei einem Gerät mit einem Differentialgetriebe mit zwei Ausgängen über einen Ausgang nur die Kassettenhalteeinrichtung und über den anderen Ausgang die Bandfädeleinrichtung und mindestens eine Bandlaufbetriebseinrichtung verstellt werden. Bei einem solchen Gerät kann der andere Ausgang beispielsweise zwei Verstellschieber antreiben, von denen der eine die Bandfädeleinrichtung und der andere die Bandlaufbetriebseinrichtung antreibt. Bei den drei vorstehend beschriebenen Geräten erfolgt der Antrieb des Differentialgetriebes über einen Schneckenantrieb, der bei stillstehendem Antriebsmotor für das Differentialgetriebe das eingangsseitige Antriebsrad des Differentialgetriebes blockiert. Selbstverständlich kann anstelle des Schneckenantriebes auch ein anderer Antrieb, wie ein Seilantrieb, vorgesehen sein und das eingangsseitige Antriebsrad hierbei mit einem verstellbaren Riegel blockierbar sein, der dann, wenn die zuletzt vom Differentialgetriebe verstellte Geräteeinrichtung ihre durch die vorherige Verstellung erreichte Position einnimmt, mit dem eingangsseitigen Antriebsrad in Wirkverbindung tritt und dasselbe gegen Verdrehen verriegelt. Auch kann für jede der über das Differentialgetriebe zu verstellende Geräteeinrichtung eine separate steuerbare lösbare Verriegelungseinrichtung vorgesehen sein, wobei sich dann eine Verriegelung für das eingangsseitige Antriebsrad des Differentialgetriebes erübrigt. Auch im Hinblick auf die Ausbildung des Differentialgetriebes an sich bietet der diesbezügliche bekannte Stand der Technik viele Möglichkeiten. Dies gilt ebenso für die Ausbildung der Kassettenhalteeinrichtung, der Bandfädeleinrichtung und der Bandlaufbetriebseinrichtung. Die Kassettenhalteeinrichtung kann auch in an sich bekannter Weise zwischen einer Ladeposition und einer Betriebsposition um eine Welle verschwenkbar gelagert und mit dem Differentialgetriebe verstellbar sein. Die Bandfädeleinrichtung kann auch in an sich bekannter Weise zwei in entgegengesetzten Richtungen um die trommelförmige Abtasteinrichtung herum verstellbare Hebelmechanismen aufweisen, die je mindestens eine Bandführung tragen und die mit dem Differentialgetriebe zwischen ihrer Ausfädelposition und ihrer Einfädelposition verstellt werden. Als Bandlaufbetriebseinrichtung kann zusätzlich zu den beschriebenen Bandlaufbetriebseinrichtungen auch eine nach dem Einfädeln des Magnetbandes mit demselben in Wirkverbindung bringbare, zwischen einer Ruheposition und einer Wirkposition verstellbare Endabschaltungseinrichtung, mit der der Stillstand des Magnetbandes bei einer Bandlaufbetriebsart beispielsweise auf photoelektrische Weise detektierbar ist, vorgesehen sein, die mit dem Diffentialgetriebe über einen Ausgang desselben zwischen ihrer Ruheposition und ihre Wirkposition verstellt wird.

## Patentansprüche

1. Aufzeichnungs- und/oder Wiedergabegerät (1) für ein in einer Kassette (2) untergebrachtes, aus derselben herausführbares Magnetband (54) mit einer zum Halten und Verstellen einer Kassette (2) vorgesehenen Kassettenhalteeinrichtung (10), die zwischen einer Ladeposition, in der die Kassette in dieselbe einsetzbar ist, und einer Betriebsposition, in der die Kassette eine Betriebslage einnimmt, verstellbar ist, mit einer zum Herausführen des Magnetbandes (54) aus der in ihrer Betriebslage befindlichen Kassette (2) und zum Herumschlingen desselben um eine Abtasteinrichtung (70) für dasselbe vorgesehenen Bandfädeleinrichtung (69), die zwischen einer Ausfädelposition, in der sie das in der Kassette (2) untergebrachte Magnetband (54) hintergreift, und einer Einfädelposition, in der sie das bei ihrer Verstellung von ihrer Ausfädelposition in ihre Einfädelposition aus der Kassette (2) herausgeführte Magnetband (54) um die Abtasteinrichtung (70) herumgeschlungen hält, verstellbar ist, mit mindestens einer zum Durchführen mindestens einer Bandlaufbetriebsart bei in ihrer Betriebslage befindlicher Kassette (2) vorgesehenen Bandlaufbetriebseinrichtung (58), die zwischen mindestens zwei Betriebspositionen verstellbar ist, und in mindestens einer ihrer beiden Betriebspositionen zum Durchführen der Bandlaufbetriebsart wirksam ist, und mit einem von einem Motor (117) in entgegengesetzten Drehrichtungen antreibbaren Differentialgetriebe (118), das zwei Ausgänge aufweist und mit dem die Kassettenhalteeinrichtung (10), die Bandfädeleinrichtung (69) und die Bandlaufbetriebseinrichtung (58) verstellbar sind, wobei über einen Ausgang eine von diesen drei Einrichtungen (69) verstellbar ist und über den anderen Ausgang die beiden anderen von diesen drei Einrichtungen (10,58) verstellbar sind, dadurch gekennzeichnet, daß mit dem Differentialgetriebe (118) direkt über den anderen Ausgang ein Schieber (39) zwischen einer Ruheposition und mindestens einer Verstellposition geradlinig bewegt wird, der bei seiner Verstellung die beiden anderen von den drei Einrichtungen (10,58) zeitlich nacheinander verstellt.

2. Gerät nach Anspruch 1, dadurch gekennzeichnet, daß mit dem Differentialgetriebe (118) über den einen Ausgang die Bandfädeleinrichtung (69) und über den anderen Ausgang der Schieber (39) antreibbar ist, der bei in ihrer Ausfädelposition befindlicher Bandfädeleinrichtung (69) über den anderen Ausgang zwischen seiner Ruheposition und einer Zwischenposition, in der derselbe anhaltbar ist und die Bandfädeleinrichtung (69) über den einen Ausgang zwischen ihrer Ausfädelposition und ihrer Einfädelposition verstellbar ist, und der bei in ihrer Einfädelposition befindlicher Bandfädeleinrichtung (69) über den anderen Ausgang zwischen seiner Zwischenposition und seiner mindestens einen Verstellposition verstellbar ist, wobei mit dem Schieber (39) bei seiner Verstellung zwischen seiner Ruheposition und seiner Zwischenposition die Kassettenhalteeinrichtung (10) zwischen ihrer Ladeposition und ihrer Betriebsposition und bei seiner Verstellung zwischen seiner Zwischenposition und seiner mindestens einen Verstellposition die Bandlaufbetriebseinrichtung (58) zwischen ihren mindestens zwei Betriebspositionen verstellbar ist.

## Claims

1. A recording and/or reproducing apparatus (1) for a magnetic tape (54) which is accommodated in a cassette (2) and can be extracted therefrom, the apparatus having a cassette-holder device (10) for holding and moving a cassette (2), which cassette-holder device is movable between a loading position, in which the cassette can be inserted into the cassette-holder device, and an operating position, in which the cassette occupies an operating position, having a tape-threading device (69) for extracting the magnetic tape (54) out of the cassette (2) in the operating position of the cassette and for wrapping the magnetic tape around a scanning device (70) for said tape, which tape-threading device is movable between a thread-out position, in which it engages behind the magnetic tape (2) in the cassette (54), and a thread-in position, in which it holds the magnetic tape (54) wrapped around the scanning device (70) after said tape has been extracted from the cassette (2) during the movement from its thread-out position to its thread-in position, having at least one tape-transport-function device (58) which is adapted to perform at least one tape-transport function while the cassette (2) is in its operating position, and which is movable between at least two operating positions and in at least one of its two operating positions is operative to perform the tape-transport function, and having a differential mechanism (118) which can be driven in opposite directions of rotation by a motor (117) and which has at least two outputs, by means of which mechanism the cassette-holder device (10), the tape-threading device (69) and the tape-transport-function device (58) are movable, at least one (69) of said three devices being movable *via* one output and the two other devices (10, 58) of said three devices being movable *via* the other output, characterised in that *via* the other output the differential mechanism (118) directly moves a slide (39) rectilinearly between a rest position and at least one actuating position, which slide actuates the other two (10, 58) of the three devices after each other in time.

2. An apparatus as claimed in Claim 1, characterised in that the differential mechanism (118) is adapted to drive the tape-threading device (69) *via* the one output and the slide (39) *via* the other output, which slide when the tape-threading device (69) is in its thread-out position is movable between its rest position and an intermediate position *via* the other output, in which intermediate position said slide can be stopped and the tape-threading device (69) is movable between its thread-out position and its thread-in position *via* the one output, and when the tape-threading device (69) is in its thread-in position is movable between its intermediate position and its at least one actuating position *via* the other output, the cassette-holder device being movable between its loading position and its operating position by means of the slide (39) when said slide is moved between its rest position and its intermediate position and the tape-transport-function device (58) being movable between its at least two operating positions by means of said slide when said slide is moved between its intermediate position and its at least one actuating position.

## Revendications

1. Appareil d'enregistrement et/ou de lecture (1) d'une bande magnétique (54) placée dans une cassette (2) et pouvant être extraite de celle-ci, muni d'un dispositif de support de cassette (10) prevu pour retenir et déplacer une cassette (2), dispositif de support de cassette pouvant être déplacé entre une position de chargement, dans laquelle la cassette peut être introduite dans celui-ci, et une position de fonctionnement dans laquelle la cassette prend une position de fonctionnement, d'un dispositif d'enfilage de bande (69) prévu pour extraire la bande magnétique (54) de la cassette (2) se trouvant en position de fonctionnement et pour l'enlacer autour d'un dispositif d'exploration (70) de bande, dispositif d'enfilage de bande pouvant être déplacé entre une position d'enlèvement dans laquelle il prend derrière la bande magnétique (54) placée dans la cassette (2), et une position de mise en place dans laquelle, lors du déplacement à partir de sa position d'enlèvement vers sa position de mise en place, il maintient la bande magnétique (54) extraite de la cassette (2) enlacée autour du dispositif d'exploration (70), d'au moins un dispositif de transport de bande prévu pour réaliser au moins un mode de transport de bande lorsque la cassette (2) se trouve en position de fonctionnement, dispositif de transport de bande pouvant être déplacé entre au moins deux positions de fonctionnement et étant actif dans au moins l'une des deux positions de fonctionnement pour réaliser le mode de transport de bande, et d'un mécanisme différentiel (118) pouvant être entraîné par un moteur (117) dans des sens de rotation contraires, ce mécanisme différentiel présentant deux sorties et permettant de déplacer le dispositif de support de cassette (10), du dispositif d'enfilage de bande (69) et du dispositif de transport de bande (58), l'un de ces trois dispositifs (69) pouvant être déplacé par l'intermédiaire d'une première sortie et les deux autres (10, 58) pouvant être déplacés par l'intermédiaire de l'autre sortie, caractérisé en ce que, à l'aide du mécanisme différentiel (118), un coulisseau (39) est déplacé directement en ligne droite entre une position de repos et au moins une position de déplacement par l'intermédiaire de l'autre sortie, coulisseau qui, lors de son déplacement, déplace les deux autres des trois dispositifs (10, 58) successivement dans le temps.

2. Appareil selon la revendication 1, caractérisé en ce que, à l'aide du mécanisme différentiel (118), le dispositif d'enfilage de bande peut être entraîné par l'intermédiaire de la première sortie et le coulisseau (39) peut être entraîné par l'intermédiaire de l'autre sortie, coulisseau qui, le dispositif d'enfilage de bande (69) se trouvant dans sa position d'enlèvement, peut être déplacé, par l'intermédiaire de l'autre sortie, entre sa position de repos et une position intermédiaire dans laquelle ledit coulisseau peut être retenu et dans laquelle le dispositif d'enfilage de bande (69) peut être déplacé, par l'intermédiare de la première sortie, entre sa position d'enlèvement et sa position de mise en place, et qui, le dispositif d'enfilage de bande (69) se trouvant dans sa position de mise en place, peut être déplacé, par l'intermédiaire de l'autre sortie, entre sa position intermédiaire et sa position de déplacement, le dispositif de support de cassette (10) pouvant être déplacé entre sa position de chargement et sa position de fonctionnement à l'aide du coulisseau (39) lorsque celui-ci est déplacé entre sa position de repos et sa position intermédiaire et le dispositif de transport de bande pouvant être déplacé entre ses au moins deux positions de fonctionnement à l'aide du coulisseau lorsque celui-ci est déplacé entre sa position intermédiaire et sa position de déplacement.
